(19) **Europäisches Patentamt / European Patent Office / Office européen des brevets**

(11) **EP 1 304 652 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(51) Int Cl.:
*G06T 9/00* (2006.01)        *G06T 17/50* (2006.01)
*G06T 11/20* (2006.01)

(21) Anmeldenummer: **02022079.4**

(22) Anmeldetag: **02.10.2002**

(54) **Verfahren zur Kompression und Übertragung von Bilddaten**

Method for compression and transmission of image data

Méthode de compression et transmission de données d'image

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **13.10.2001 DE 10150655**

(43) Veröffentlichungstag der Anmeldung:
**23.04.2003 Patentblatt 2003/17**

(73) Patentinhaber: **Mann + Maus OHG
30175 Hannover (DE)**

(72) Erfinder: **Lege, Martin
31515 Wunstorf (DE)**

(74) Vertreter: **Springorum, Harald
Kiani & Springorum,
Patent- und Rechtsanwälte
Taubenstrasse 4
40479 Düsseldorf (DE)**

(56) Entgegenhaltungen:
**US-A- 5 535 316**

- IMAI H ET AL: "COMPUTATIONAL-GEOMETRIC METHODS FOR POLYGONAL APPROXIMATIONS OF A CURVE" COMPUTER VISION GRAPHICS AND IMAGE PROCESSING, ACADEMIC PRESS, DULUTH, MA, US, Bd. 36, Nr. 1, 1. Oktober 1986 (1986-10-01), Seiten 31-41, XP000718797

- HONGRUI ZHAO ET AL: "A modified Douglas-Pecuker simplification algorithm" IGARSS 2001. IEEE 2001 INTERNATIONAL GEOSCIENCE AND REMOTE SENSING SYMPOSIUM. SYDNEY, AUSTRALIA, JULY 9 - 13, 2001, IEEE INTERNATIONAL GEOSCIENCE AND REMOTE SENSING SYMPOSIUM, NEW YORK, NY : IEEE, US, Bd. VOL. 1 OF 7, 9. Juli 2001 (2001-07-09), Seiten 1968-1970, XP010572317 ISBN: 0-7803-7031-7

- SALOTTI M: "An efficient algorithm for the optimal polygonal approximation of digitized curves" PATTERN RECOGNITION LETTERS, NORTH-HOLLAND PUBL. AMSTERDAM, NL, Bd. 22, Nr. 2, Februar 2001 (2001-02), Seiten 215-221, XP004315123 ISSN: 0167-8655

- ZHU Y ET AL: "Optimal polygonal approximation of digitised curves" IEE PROCEEDINGS: VISION, IMAGE AND SIGNAL PROCESSING, INSTITUTION OF ELECTRICAL ENGINEERS, GB, Bd. 144, Nr. 1, 28. Februar 1997 (1997-02-28), Seiten 8-14, XP006009028 ISSN: 1350-245X

- CHAN K W, CHIN F Y L: "Optimal multiresolution polygonal approximation" PROCEEDINGS OF THE THIRD ANNUAL INTERNATION COMPUTING AND COMBINATORICS CONFERENCE COCOON '97, 20. August 1997 (1997-08-20), - 22. August 1997 (1997-08-22) Seiten 32-41, XP009035865

**Beschreibung**

Die vorliegende Erfindung liegt auf dem Gebiet der Kompression und Datenübertragung bei der Verarbeitung von Bilddaten, vorzugsweise von geographischen Daten.

Die Erfindung betrifft insbesondere die Kompression von geographischen Daten, die auf einem Server liegen, deren zumindest ausschnittsweiser Übertragung an einen Client und deren Darstellung auf einem Anzeigegerät des Client.

Bei der Verarbeitung von geographischen Quelldaten ist häufig die Datenmenge ein entscheidendes Kriterium für die Güte bzw. Qualität des Verfahrens. Sollen beispielsweise Landkarten oder Ausschnitte davon via Internet übermittelt werden, so ist die Reaktionszeit, also der Zeitraum, in dem die Daten auf dem Zielrechner, dem Anzeigegerät des Client, dargestellt werden, nahezu ausschließlich von der Menge der zu übertragenden Daten abhängig.

Bisherige Systeme reduzieren die Quelldaten lediglich insofern, als daß sie nur die Daten übertragen, die innerhalb eines vom Benutzer zu wählenden Ausschnitts des Kartenmaterials liegen. Diese Daten werden allerdings nicht weiter komprimiert. Dies führt zu langen Übertragungs- und Darstellungszeiten. Eine Weiterverarbeitung der Quelldaten hinsichtlich einer Reduzierung des Datenmaterials ist bislang unter anderem deshalb vermieden worden, damit die Güte der Darstellung durch die Reduktionsmaßnahmen nicht nachteilig beeinflußt wird. Bei der Darstellung von Landkartendaten, die unmittelbar aneinander anschließende Grenzen umfassen, ist es beispielsweise erforderlich, daß zusammenfallende Grenzlinien im Original auch wieder exakt auf zusammenfallende Grenzlinien in der Bildschirmdarstellung abgebildet werden. Würden etwa durch die Datenreduzierung Lücken oder Überlappungen unmittelbar zusammenfallender Grenzlinien in der Bildschirmdarstellung entstehen, wäre dies nicht tragbar.

In dem Artikel "A Fast Sequential Method for Polygonal Approximation of Digitized Curves", Karin Wall/Per-Erik Danielsson, erschienen in "Computer Vision, Graphics, and Image Processing" 28, 220-227 (1984) wird ein neues Verfahren in der Bildverarbeitung und Mustererkennung vorgestellt, das eine Kurve in iterativer Anwendung eines Testkriteriums durch eine Vielzahl von sequentiellen Geradenstücken approximiert.

Die Größe des Zielbildes, gemessen in Bildschirmpixeln in X- bzw. Y-Richtung, wird allerdings generell weder im Stand der Technik noch bei dem eben dargestellten Verfahren berücksichtigt. Diese bislang unberücksichtigt gebliebene technische Kopplung von Approximation und der Zielbildgröße ist jedoch sinnvoll, denn die Abbildung eines Kurvenstücks in die Bildfläche des Zielbildschirms ist zwangsläufig mit einer Rasterung und damit mit einem Abbildungsfehler verbunden. Die Kompression der Bilddaten, die unter anderem durch die Approximation der Polygone erfolgt, kann sinnvollerweise so ausgelegt sein, daß der resultierende Fehler die Größenordnung hat, die sich aus der gerasterten Darstellung am Zielbildschirm ergibt. Damit kann vorteilhafterweise die Reduktion der Daten bereits vor der Übertragung der Daten, auf seiten des Servers erfolgen und muß nicht - wie bisher - auf seiten des Client durchgeführt werden. Dieser Vorteil wirkt sich entscheidend bei der Datenübertragung über das Internet aus.

Da es bei der Verarbeitung von geographischen Daten notwendig ist, hinsichtlich Größe und Lage beliebig wählbare Ausschnitte bestimmen zu können, die übertragen werden sollen, können die Daten bei geforderter guter Näherung bezügl. Bildgröße und Ausschnitt auch nicht im Vorfeld vereinfacht bzw. komprimiert werden.

Einerseits sind bekannte Verfahren auf dem Gebiet der Geo-Informationssysteme, die die Quelldaten unverarbeitet übermitteln aus den vorstehend genannte Gründen mit schwerwiegenden Nachteilen hinsichtlich der Darstellungs- bzw. Ladegeschwindigkeit verbunden.

Andererseits erfüllen die bekannten Datenreduktions- oder Kompressionverfahren die Anforderungen nicht, die speziell für die Übertragung und Darstellung von geographischen Daten bestehen. So vermögen sie nicht sicherzustellen, daß der optische Eindruck, der bei der Darstellung der Bilddaten auf dem Client-Bildschirm entsteht, nicht oder nur unwesentlich beeinträchtigt wird.

Als solche Systeme nach dem Stand der Technik sind die US 5 535 316 sowie ein System nach dem Aufsatz von Imai aus dem Jahre 1986 (Imai, H. et al., Computational-Geometric Methods for Polygonal Approximations of a Curve", Computer Vision Graphics and Image Processing, Academic Pressm Duluth, Ma., Vereinigte Staaten von Amerika, Bd. 36, Nr. 1, 01.10.1986, S. 31-41) zu nennen.

Aufgabe der vorliegenden Erfindung ist es deshalb, ein Verfahren, eine Vorrichtung und ein Geo-Informations-System zur Kompression, Übertragung und Darstellung von Bilddaten, vorzugsweise geographischen Daten, bereit zu stellen, bei dem/der die Menge der zu übertragenden Daten reduziert ist und das/die eine zeitoptimierte Darstellung dieser Daten ohne optisch sichtbare Qualitätseinbuße ermöglicht.

Diese Aufgabe wird durch ein Verfahren nach Patentanspruch 1 gelöst. Zweckmäßige Ausführungsformen ergeben sich aus den Unteransprüchen hierzu.

Weiterhin wird die Aufgabe durch einen Signalprozessor nach Patentanspruch 19 gelöst. Auch hier ergeben sich zweckmäßige Ausführungsformen aus den hierauf rückbezogenen Unteransprüchen.

In einer Ausführungsform ist es auch möglich, zumindest einzelne Module des Signalprozessors durch Software zu lösen. Unter einem Signalprozessor im Sinne der vorliegenden Erfindung wird dabei auch eine Ausführungsform verstanden die alle oder einzelne Module in Software realisiert.

Selbstverständlich eignet sich das erfindungsgemäße Verfahren in allen Ausführungsformen auch zum Betrieb des Signalprozessors und/oder seiner Module, wie sich auch die erfindungsgemäße Betriebsweise des Signalprozessors in allen Ausführungsformen zur Durchführung des erfindungsgemäßen Verfahrens eignet.

Eine Aufgabenlösung gemäß Anspruch 15 beinhaltet ein erfindungsgemäßes Geo-Informations-System. Auch hier ergeben sich zweckmäßige Ausführungsformen aus den Unteransprüchen.

Vorzugsweise ist das erfindungsgemäße Geo-Informations-System zur Kompression und Übertragung von geographischen Bilddaten bestimmt und es weist ein Datenverarbeitungssystem als Server auf, wobei es programmtechnisch so eingerichtet ist, daß es nach dem erfindungsgemäßen Verfahren arbeitet und weist in einer weiteren Ausführungsform vorzugsweise auch

- zumindest einen Client auf, der zumindest ein Anzeigegerät mit einer Auflösung und mit einer zur Darstellung der Bilddaten bestimmten Bildgröße aufweist, auf dem zumindest ein an den Client übertragener Ausschnitt der Daten dargestellt werden soll.

Von diesem können die Größe des Ausschnitts der darzustellenden Bilddaten und die Bildabmessungen bzw. die Bildgröße erfaßt werden, woraus alle darin enthaltenen Linien und/oder Teillinien ermittelt werden und bei dem vorzugsweise unabhängig von der Auflösung des Anzeigegerätes eine zulässige Abweichung für eine Approximation voreingestellt wird.

Auch können die Bilddaten dieses Ausschnitts auf die Bildgröße des Anzeigegerätes umgerechnet werden, sowie

- die umgerechneten Bilddaten unter Berücksichtigung der vorbestimmten, zulässigen Abweichung und durch Auswahl einer vorzugsweise jeweils optimalen Näherung anhand der Werte der Datenstruktur approximiert werden, und

die approximierten Linien und/oder Teillinien zu komprimierten Polygonen zusammengesetzt , und die komprimierten Polygone und/oder Linien und Punktdaten an den Client übertragen und auf dessen Anzeigegerät dargestellt werden.

Dieses System stellt ein datenverkehrsnetz-basiertes Client-Server-Netzwerk zur Verfügung, das Bilddaten so komprimiert und anschließend überträgt, daß der durch die komprimierte Darstellung entstandene Fehler in der Größenordnung liegt, die sich ohnehin aufgrund der Rasterstruktur der Bildschirmpixel ergibt.

Mit der erfindungsgemäßen Lösung ist es möglich, daß nur minimale Datenmengen übertragen werden, obwohl die Darstellung bildschirmfüllend ist.

In einer bevorzugten Ausführungsform der Erfindung werden die Verfahrensschritte teilweise parallel und/oder ansonsten in der zeitlichen Abfolge ausgeführt, die sich aus der oben dargestellten, sequentiellen Aufzählung der Verfahrensschritte ergibt. In einer alternativen Form der Erfindung ist an dieser Stelle eine andere zeitliche Abfolge der Abarbeitung vorgesehen. So ist es beispielsweise möglich, die Werte der zweiten Datenstruktur unter Echtzeitbedingungen zu berechnen. Der Begriff 'im voraus' bezieht sich in diesem Zusammenhang auf den Zeitraum vor der Approximation der Linien und/oder Teillinien .

Wie bereits oben erwähnt, spielt die Quelldatenmenge bei der Übertragung der Daten und damit auch für die Darstellungsgeschwindigkeit auf einem Bildschirm eine kritische Rolle. Müssen insbesondere Daten über das Internet geladen werden, ist eine Reduzierung der zu übertragenden Daten unerläßlich. Vorteilhafterweise erfolgt mit dem erfindungsgemäßen Verfahren eine Komprimierung der Daten bereits auf seiten des Servers, d.h. entweder direkt auf dem Server oder auf einem mit ihm in Datenaustausch stehenden Rechner, und damit vor der Übertragung der Daten - und nicht, wie bisher, auf dem Rechner des Endanwenders.

Ein weiterer, sich in der Praxis als sehr wesentlich erweisender Vorteil ist darin zu sehen, daß die Qualität der Darstellung trotz der Komprimierung der übertragenen und darzustellenden Daten nicht leidet und vergleichbar mit derjenigen bekannter Verfahren ist, obwohl nur ein Bruchteil der Daten übertragen wird.

Soll beispielsweise ein Ausschnitt einer Landkarte auf einen Bildschirm eines Anwenders übertragen und dort in einer bestimmten Größe dargestellt werden, so werden erfindungsgemäß die Polygone Linien und Punkte bestimmt, die innerhalb dieses angeforderten Ausschnitts liegen. Nachdem die Bildgröße für die Darstellung des Bildes auf dem Zielbildschirm ermittelt worden ist, werden die Ausschnittsdaten auf die Bildgröße umgerechnet. Bildlich entstehen damit gerasterte Vektoren, das heißt eine Sequenz von Pixeln des Bildschirms, die ein Abbild der Ausschnittsdaten betreffen. Eine Darstellung in dieser Form hätte den untragbaren Nachteil, daß das Datenmaterial wegen der fehlenden Reduzierung zu umfangreich wäre. Die gerasterten Vektoren der Linien und/oder Teillinien werden erfindungsgemäß einem Approximationsverfahren unterzogen, dessen Abweichungsfehler eine vorbestimmte Grenze nicht übersteigt. Diese Grenze wird unabhängig von der Auflösung des Zielbildschirms in Anteilen von Bildschirmpixeln festgesetzt. Anschließend werden die approximierten Linien und/oder Teillinien zu komprimierten Polygonen zusammengefügt und können in dieser komprimierten Form zusammen mit den übrigen komprimierten Linien und den Punktdaten an den Client übertragen werden, um dort auf dem Bildschirm dargestellt zu werden.

Bei dem hier vorgestellten Verfahren und System liegen zum einen die Quelldaten auf dem Server und/oder zum anderen die aufbereiteten Quelldaten. Die aufbereiteten Quelldaten bzw. das vorverarbeitete Datenmaterial besteht aus Punkt- und Liniendaten und ist vorzugsweise in Form von sortierten Listen von Linien und/oder Teillinien abgelegt. Dabei wird berücksichtigt, daß mehrfach genutzte Grenzlinien, also Linien oder Linienstücke, die von mehreren Polygonen verwendet werden, jeweils nur einfach abgespeichert sind. Eine Identifikation der jeweiligen, die Linienstücke verwendenden Polygone ist über einen Identifikationsparameter möglich, der in der Liste - zumindest bei den mehrfach genutzten Linienstücken - mitgeführt wird.

Das Verfahren basiert grundsätzlich auf der Verarbeitung von vektor-basierten Daten, was die Vorteile einer schnelleren Datenverarbeitung und einem geringeren Speicherplatzbedarf mit sich bringt. Das Quelldatenmaterial kann z.B. in Form von Shape-Files oder GEN-Files oder auch in jedem beliebigen Vektordatenformat vorliegen.

In einem weiteren Vorbereitungsschritt wird in einer vorteilhaften Ausführungsform eine zweite Datenstruktur, vorzugsweise zumindest eine Tabelle, angelegt, die innerhalb eines symmetrischen Bereichs von Pixeln alle möglichen Strecken ausgehend vom Zentrum zu jedem Punkt des Bereichs mit den jeweiligen Abweichungswerten zu den Pixeln enthält.

In Echtzeit wird ein Ausschnitt aus den Landkartendaten bestimmt und angefordert. Weiterhin werden die Abmessungen des Bildes in Pixeln erfaßt und es werden vorzugsweise anhand einer Bounding-Box (und damit mit einfachen Vergleichsoperationen) die Punkt- und Liniendaten ausgewählt, die sich innerhalb des angeforderten Ausschnitts befinden. Diese Bilddaten werden auf die Größe des angeforderten Ausschnitts begrenzt bzw. umgerechnet. Die Umrechnung projeziert alle im angeforderten Ausschnitt enthaltenen Punkt- und/oder Liniendaten in den Bildbereich des Client Anzeigegerätes, wobei wobei dies vorzugsweise proportional, etwa mittels einer Zentralprojektion geschieht.

Aufgrund der erfaßten Daten können nun die für die jeweilige Darstellung umgerechneten und relevanten Linien und/oder Teillinien approximiert werden, indem die für die jeweilige Darstellung geeignetste Näherung auf Grundlage der vorausberechneten Werte der Datenstruktur bestimmt wird, so daß der durch die Approximation entstehende Fehler, der durch den Flächenanteil der Bildschirmpixel des Anzeigegerätes definiert wird, der außerhalb eines Toleranzbereichs liegt, eine vorgegebene Abweichung nicht übersteigt.

Damit entsteht der Vorteil, daß die Approximation und damit das gesamte Verfahren sehr zeitoptimiert ist, da es auf Grundlage von bereits vorausberechneten aber nur abstrakt vorhandenen Näherungsdaten erfolgt. Die konkreten, spezifischen Näherungen können natürlich nicht vorausberechnet werden, sondern müssen auf Grundlage der Menge aller abstrakt möglichen Näherungen bestimmt werden.

Die approximierten Linien und/oder Teillinien werden aufgrund von erfaßten und berechneten Vervollständigungsparametern zu komprimierten und geschlossenen Polygonen zusammengefaßt, und zusammen mit den übrigen komprimierten Linien und den Punktdaten an den Client übertragen und auf dessen Bildschirm dargestellt.

In der bevorzugten Ausführungsform basiert die Approximation auf der iterativen Suche nach einer möglichst langen Ausgleichsstrecke, die über einen Zugriff auf die vorausberechneten Werte der zweiten Datenstruktur ermittelt wird. Der symmetrische Bereich ist hier als Kreis ausgebildet, der aus quadratischen Flächen bzw. Pixeln besteht. Der Radius des Kreises bestimmt die längste Ausgleichsstrecke, die aus der Datenstruktur ermittelt werden kann.

Zur Bestimmung einer Ausgleichsstrecke werden die Original-Punkte, vorzugsweise mittels Zentralprojektion, auf die Bildebene abgebildet. Der erste Punkt der Linie ist der Startpunkt für die Approximation und entsprechend wird das Zentrum des Kreises auf diesen Punkt gesetzt.

Die Ausgleichsstrecke wird ermittelt, indem zu jedem folgenden Punkt der Linie alle möglichen Strecken innerhalb des Kreises aus der Datenstruktur ausgelesen werden und die Schnittmenge dieser Strecken gebildet wird.

Hierbei werden diejenigen Strecken berücksichtigt, bei denen zumindest ein Teil der Pixelfläche innerhalb des zulässigen Toleranzbereichs (beispielsweise eine halbe Pixelbreite) von der Strecke liegt; dieser Flächenanteil muß größer Null sein.

Die auswertende Iteration über die Sequenz von Punkten wird unter folgenden Abbruchbedingungen beendet:

- Die Schnittmenge der möglichen Ausgleichsstrecken ist leer.

- Die Schnittmenge der möglichen Ausgleichsstrecken ist nicht leer aber der folgende Punkt der Linie liegt außerhalb des Kreises.

- Die Schnittmenge ist nicht leer, aber der Abstand des folgenden Punktes zum Zentrum ist geringer als die Länge der aktuell besten Ausgleichsstrecke. Das ist der Fall, wenn die Linie in ihrem Verlauf die Richtung umkehrt (Verletzung der Kollinearität der Punkte).

- Die Schnittmenge ist nicht leer, aber die Summe der Flächenanteile, die innerhalb des zulässigen Bereiches liegen, geteilt durch die Anzahl der beteiligten Punkte unterschreitet einen bestimmten Schwellwert, der voreingestellt werden kann.

Das Ergebnis der Approximation läßt sich folgendermaßen festhalten:

Die resultierende Ausgleichsstrecke wird aus der letzten nicht leeren Schnittmenge der möglichen Strecken ermittelt. Bei mehreren möglichen Strecken, wird diejenige ausgewählt, die den geringsten Abweichungsfehler aufweist und dem letzten gültigen Punkt am nächsten liegt.

Beim Sonderfall, daß auf den Punkt im Kreiszentrum sofort ein Punkt außerhalb des Kreises folgt, wird keine Näherung vorgenommen, da die vorliegende Strecke ohnehin schon länger ist, als durch die Approximation erreichbar wäre. Die vorhandene Strecke wird daher direkt übernommen.

Die Iteration wird fortgeführt, indem als Startpunkt für die nächste Approximation der Endpunkt der Ausgleichsstrecke gewählt wird.

Mit dem letzten (Original-) Punkt der Linie wird die Approximation abgeschlossen. Dabei muß gewährleistet sein, daß der letzte Punkt auch der Endpunkt der letzten Ausgleichsstrecke ist, damit aufeinanderfolgende Linien auch nahtlos ineinander übergehen. Für den Fall, daß die Linie Teil eines Polygons ist, wird hierdurch sichergestellt, daß das resultierende Polygon auch nach der Näherung noch eine geschlossene Kurve darstellt.

Vorteilhafterweise kann mittels des hier vorgestellten Verfahrens eine optimale Ausgleichsstrecke gefunden werden, indem die jeweilige Pixelfläche innerhalb des Toleranzbereichs der Näherungsstrecke als Gewichtungsfaktor bzw. Gewicht verarbeitet wird.

Bei der Projektion, vorzugsweise Zentralprojektion der originalen Bilddaten in die Bildfläche des Anzeigegerätes entsteht aufgrund der erforderlichen ganzzahligen Rundung der Werte zwangsläufig ein Abbildungsfehler. Durch geeignete Festsetzung der hier beschriebenen Parameter (Größe des zulässigen Bereichs, Schwellenwert für das Gewicht) ist es möglich, den Abweichungsfehler des erfindungsgemäßen Approximationsverfahrens in derselben Größenordnung zu halten, die der Fehler hat, der durch die Rundungen bei der Projektion, vorzugsweise Zentralprojektion entsteht.

Aufgrund der wahlweise einstellbaren und gezielten Auslegung des Approximationsverfahrens kann auf dem Bildschirm vorteilhafterweise eine mittlere Abweichung von den Originaldaten von weniger als einem Pixel erzielt werden.

Bei der Vorverarbeitung der Bilddaten werden die Bilddaten derart strukturiert und/oder abgespeichert, daß bei der späteren Approximation Grenzlinien, die in den originalen Daten exakt übereinander lagen in der approximierten Darstellung ebenfalls wieder exakt übereinander liegen. Dies trifft beispielsweise auf politischen Grenzen in Landkarten zu, die direkt aneinander liegen.

Dies wird erreicht, indem die Polygone derart in Teillinien zerlegt werden, daß Grenzlinien zweier benachbarter Polygone als Einzellinien auftreten. Ein Polygon besteht anschließend nicht mehr aus einer Liste von Punkten, sondern aus einer Liste von aufeinanderfolgenden Teillinien.

Eine besonders vorteilhafte Anwendung des Verfahrens bezieht sich auf die Kompression von Bilddaten, die über das Internet übertragen werden sollen, indem erfindungsgemäß ausschließlich die Daten der approximierten Polygone und/oder Linien und Punktdaten übertragen werden und nicht etwa, wie bei den bekannten Verfahren, alle Originaldaten innerhalb des angeforderten Ausschnittes (so daß eine etwaige Datenreduktion erst nach der Übertragung auf seiten des Endanwenders bzw. Clients erfolgen kann).

Das Anzeigegerät ist vorzugsweise ein Monitor des Clients. In alternativen Ausführungsformen ist es jedoch auch möglich, ein weiteres Display vorzusehen, das mit dem Client in Datenaustausch steht und auf dem die Daten dargestellt werden sollen. Dies können auch Displays auf Mobilfunkgeräten sein.

In der bevorzugten Ausführungsform der Erfindung umfaßt das erfindungsgemäße System für die Darstellung der komprimierten Polygone und/oder Linien Mechanismen der Kantenglättung, wie beispielsweise ein Anti-Aliasing. Dies wird auf dem Rechner des Client ausgeführt.

Ein wesentlicher Vorteil ergibt sich daraus, daß durch das erfindungsgemäße Verfahren eine Rekonstruktion der originalen, geographischen Daten aus den approximierten Daten nicht möglich ist.

Das Verfahren ist vorzugsweise so ausgelegt, daß es vor der Übertragung der Daten, vorzugsweise nicht in Echtzeit, für einen Bereich von Punkten der Bilddaten den jeweiligen Flächenanteil jedes Pixels bestimmt, der innerhalb eines vorbestimmen, variabel einstellbaren Toleranzbereichs zu jeder möglichen, approximierenden Linie liegt und diese Linie als potentielle Näherung zu einem Punkt abspeichert, falls der zugehörige Flächenanteil größer Null ist. Der Bereich, in dem mögliche Näherungen vorausberechnet werden ist bezüglich der acht Hauptrichtungen der XY-Ebene symmetrisch ausgebildet und ist vorzugsweise ein Kreis. Die Größe des Bereichs ist vorzugsweise interaktiv einstellbar und - gemäß der zur Zeit üblichen Bildschirmauflösungen - vorzugsweise in einem Bereich zwischen 10 und 20 Pixeln voreingestellt.

In einer vorteilhaften Ausführungsform werden die vorausberechneten, möglichen Näherungen in einer zweiten Datenstruktur abgelegt. Sie ist vorzugsweise in Form einer m*m-Tabelle angelegt, wobei m die Anzahl der Punkte innerhalb eines vorzubestimmenden Bereichs ausgenommen des Zentrums ist, und enthält zu jedem Punkt bezüglich jeder Strecke eine Kennzahl die den Grad der Zulässigkeit für die jeweilige Näherung bemißt.

Die erste und gegebenenfalls die zweite Datenstruktur sind auf dem Server abgelegt.

Ein wichtiger Vorteil des erfindungsgemäßen Kompressions- und Übertragungsverfahrens liegt darin, daß eine Unterteilung in Verfahrensschritte möglich ist, die in Vorverarbeitung ausgeführt werden und in solche, die in Echtzeit ausgeführt werden. Damit kann die Effizienz des Verfahrens signifikant gesteigert werden.

Eine vorteilhafte Verwendung des Verfahrens bezieht sich auf die Verbesserung der Darstellung von bildbezogenen, geographischen Daten auf einem Bildschirm, wobei die Auflösung des Bildschirms berücksichtigt wird.

Eine alternative Aufgabenlösung sieht ein Speichermedium vor, das zur Speicherung des vorstehend beschriebenen, computer-implementierten Verfahrens bestimmt ist und von einem Computer lesbar ist.

Die vorstehend beschriebenen Ausführungsformen des Verfahren nach der vorliegenden Erfindung eignen sich jeweils selbstverständlich als Computerprogrammprodukt, welches ein computerlesbares Medium mit Computerprogramm-Code-Mitteln aufweist oder als Computerprogramm auf einem Trägersignal und bei dem nach Laden des Computerprogramms der Computer durch das Programm zur Durchführung der hier beschriebenen erfindungsgemäßen Verfahren veranlaßt wird.

Ebenso selbstverständlich ist von der Erfindung auch ein Computer-Programm mit Programmcode zur Durchführung des erfindungsgemäßen Verfahrens, wenn das Programm auf einem Computer abläuft, umfaßt, was selbstverständlich für alle Ausführungsformen des erfindungsgemäßen Verfahrens gilt.

Im folgenden werden nicht einschränkend zu verstehende Ausführungsbeispiele mit weiteren Vorteilen anhand der Zeichnung besprochen. In dieser zeigen:

Fig. **1** einen grundlegenden Übertragungsweg für erfindungsgemäß komprimierte Bilddaten,

Fig. **2** einen Ablauf des erfindungsgemäßen Verfahrens,

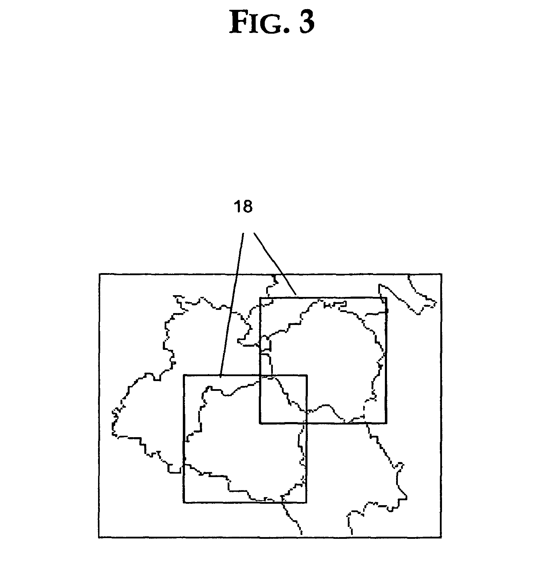

Fig. **3** eine Darstellung von Bounding-Boxen für Ausschnitte aus den Bilddaten,

Fig. **4** eine schematische Darstellung eines Entscheidungsrasters für eine Reduktion von Rechenoperationen,

Fig. **5** Beispiele für zwei unterschiedlich zu schließende Polygone,

Fig: **6, 7** Pixel, die innerhalb eines zulässigen Bereichs einer Näherungsstrecke liegen,

Fig. **8, 9** Gewichtung der in den Figuren 6 bzw. 7 dargestellten Pixel,

Fig. **10** einen Kreis mit Radius 2 und 20 Pixeln für eine Vorausberechnung von Näherungen, der in eine 20*20-Tabelle abgebildet wird,

Fig. **11a** Darstellung von Kreisgrenzen von Niedersachsen, direkt abgebildet (links) und erfindungsgemäß genähert (rechts),

Fig. **11b** Darstellung von dem Buchstaben 'a', Näherung mit einem Verfahren nach dem Stand der Technik (links) und erfindungsgemäß genähert (rechts) und

Fig. **12a-d** verschiedene Fälle für die Lage einer Näherungsstrecke bezüglich einer Pixelfläche.

Auf einem im allgemeinen mit **10** bezeichneter Server liegen Bilddaten **D**, in Form einer geographischen Karte, von der ein Ausschnitt **14** an einen Client **12** übertragen werden soll. Daraufhin sollen die übertragenen Daten **D** des Ausschnitts **14** auf einem Bildschirm **16** des Client **12** dargestellt werden.

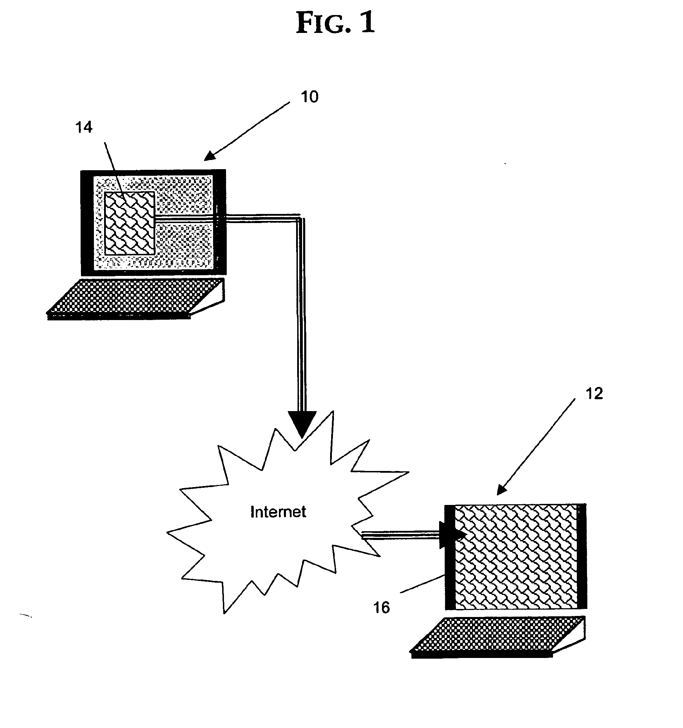

In Figur **1** ist der grundlegende Übertragungsvorgang schematisch dargestellt, wobei die Übertragung zumindest auch über das Internet erfolgt.

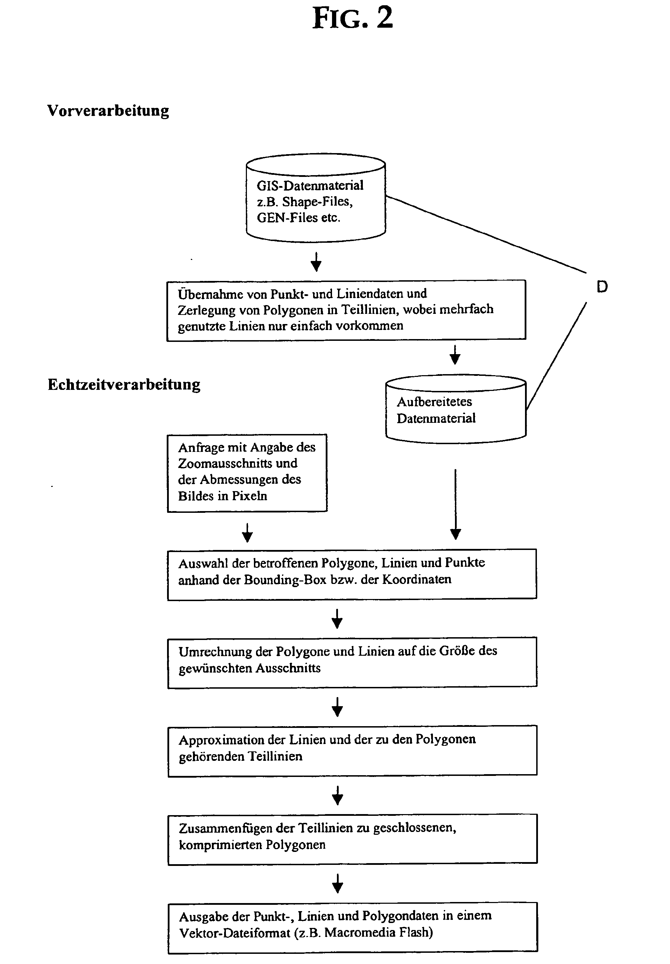

Figur **2** zeigt ein grobes Ablaufdiagramm für das erfindungsgemäße Verfahren. Die originalen Bilddaten **D** werden durch das erfindungsgemäße Verfahren in verschiedene Zwischenformen verarbeitet. So werden die originalen Quelldaten durch eine Vorverarbeitung in Linien/Teilliniendaten zerlegt; die so entstandenen aufbereiteten Daten werden in einer ersten Datenstruktur **22** abgelegt.

Die Linien/Teillinien sowie die Punkte der aufbereiteten Daten werden dann umgerechnet und die umgerechneten Linien/Teillinien werden approximiert. Die approximierten Linien/Teillinien werden in einem abschließenden Schritt entsprechend der Identifikationsparameter zu komprimierten Polygonen zusammengesetzt und können daraufhin zusammen mit den übrigen Linien und Punkten als komprimierte Bilddaten übertragen werden.

Die Quelldaten können z.B. in Form von Shape-Files oder GEN-Files vorliegen und werden in einem Vorverarbeitungsschritt ausgewertet. Dabei werden die Polygone der Bilddaten **D** in Teillinien zerlegt und weitere Punkt- und Liniendaten werden aus den Bilddaten **D** übernommen. Bei der Speicherung der Teillinien in der Datenstruktur **22** wird berücksichtigt, daß mehrfach genutzte Linien nur einfach enthalten sind.

Bei der Vereinfachung von Polygonen im Rahmen einer Datenkomprimierung muß unterschieden werden, ob die Polygone unabhängig voneinander in einer Ebene liegen oder, wie es bei politischen Grenzen der Fall ist, ob sie direkt aneinander liegen. Im letzten Fall müssen zusätzliche Mechanismen für die Approximation bzw. Vereinfachung von Polygonen vorgesehen sein, damit exakt übereinander liegende Grenzen in den Originaldaten (z.B. Gemeinde-, oder Kreisgrenzen) auch wieder in der approximierten Darstellung auf dem Bildschirm **16** des Client **12** exakt übereinander liegen.

Da je nach Startpunkt der Approximation ein Teilstück eines Polygons einen jeweils anderen Verlauf nehmen kann, entstünden andernfalls Lücken oder Überlappungen an den Grenzbereichen, was die Qualitätsanforderungen für die Darstellung nicht erfüllen würde.

Um dies zu vermeiden, werden bei der erfindungsgemäßen Verarbeitung Grenzlinien zweier benachbarter Polygone als Einzellinien abgelegt.

Dadurch kann nach abgeschlossener Approximation jedes Polygon wieder aus den Teillinien zusammengesetzt werden, wobei die Grenzlinien zwangsläufig exakt übereinander zu liegen kommen.

Die Bilddaten **D** liegen nach den vorstehend beschriebenen Vorverarbeitungsschritten in Form von aufbereitetem Datenmaterial vor.

In Echtzeit startet nun ein Anwender eine Anfrage auf dem Server **10**, nämlich einen von ihm ausgewählten Ausschnitt **14** der Karte auf seinem Bildschirm, insbesondere einem Browser, darzustellen. Nachdem die Größe des Ausschnitts **14** und die Größe des Bereichs erfaßt ist, in dem die Bilddaten **D** auf dem Bildschirm **16** des Client **12** dargestellt werden sollen, wird das aufbereitete Datenmaterial auf die Linien, Teillinien und Punkte hin durchsucht, die innerhalb des Ausschnitts **14** liegen.

Im folgenden sei der Vorgang der Auswahl der betroffenen Polygone, Linien und Punkte beschrieben:

In den zur Verfügung stehenden Daten, vorzugsweise in den aufbereiteten Daten ist zu jedem Polygon und zu jeder Linie eine sogenannte Bounding-Box **18** angegeben.

Die Bounding Box **18** entspricht einem rechteckigen Rahmen, der durch den kleinsten und größten Wert in X- bzw. Y-Richtung des jeweiligen Bildobjektes bzw. Polygons definiert ist.

Durch Verwendung der Bounding-Boxen **18** kann nun durch einfache Vergleichsoperationen und damit schnell ermittelt werden, welche Polygone und Linien innerhalb oder teilweise innerhalb des Ausschnitts **14** liegen. Alle anderen Daten werden bei der weiteren Berechnung und bei der Darstellung nicht berücksichtigt.

Dies führt zu dem wesentlichen Vorteil, daß die Reduktion der Daten bereits auf dem Server **10** stattfinden kann, so daß deutlich weniger Daten an den Client **12** übertragen werden müssen.

In einem nächsten, ebenfalls in Figur 2 dargestellten Verfahrensschritt erfolgt die Umrechnung und Begrenzung der Linien und Teillinien auf den angeforderten Ausschnitt **14.**

Bei den Linien werden alle Anteile außerhalb des Ausschnitts **14** entfernt. Im allgemeinen Fall entstehen so aus einer einzelnen Linie mehrere Linien, die von dem Rand des Ausschnitts **14** begrenzt werden.

Da das Ziel des Verfahrens unter anderem in der Verarbeitungsgeschwindigkeit liegt, ist die Anzahl der erforderlichen Fließkommaoperationen auf ein Minimum beschränkt.

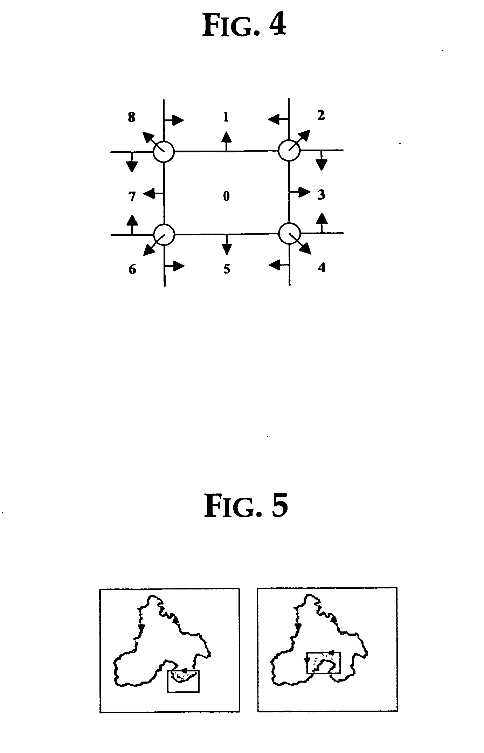

Zu diesem Zweck wird dem Ausschnitt **14** ein Raster zugeordnet, anhand dessen entschieden werden kann, ob eine Fließkommaberechnung, im vorliegenden Fall zur Berechnung von Schnittpunkten, erforderlich ist. Ein solches Raster ist exemplarisch in Figur **4** dargestellt.

Die Pfeile in Figur 4 deuten an, welchem Bereich (0-8) die Begrenzungen bzw. die Eckpunkte des Ausschnitts **14** zugeordnet sind. Der Ausschnitt **14** selbst entspricht dem Bereich, der in der Zeichnung mit '0' gekennzeichnet ist.

Die Zuordnung eines Punktes der Linie zu einem der Bereiche erfordert nur einige wenige Vergleichsoperationen. Anhand des Bereiches des aktuellen Punktes mit dem des nächsten Punktes läßt sich nun leicht feststellen, ob ein oder mehrere Schnittpunkte mit den Begrenzungen berechnet werden müssen.

Der Übergang vom Bereich '0' in einen beliebigen anderen erfordert in jedem Fall eine Schnittpunktberechnung.

Beim Übergang von Bereich '1' nach '3', '4', '5', '6', '7' müssen in jedem Fall zwei mögliche Schnittpunkte berechnet werden, beim Übergang von '1' nach '2' oder '8' kann eine Berechnung entfallen usw.

Da bei geographischen Daten die einzelnen Punkte relativ dicht zusammen liegen, also Übergänge in der Regel zu benachbarten Bereichen auftreten, ist eine Berechnung von Schnittpunkten entsprechend selten erforderlich.

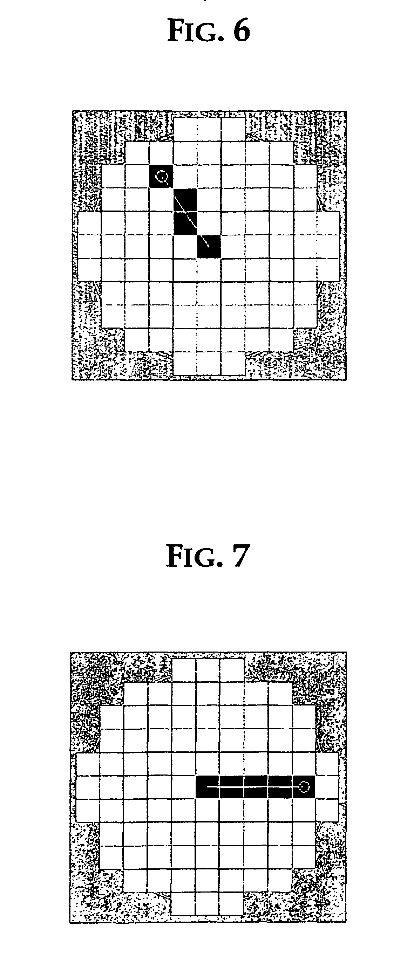

Der Ausschnitt **14** der Quelldaten wird mittels der Zentralprojektion auf die Bildfläche abgebildet. Da die X- und Y-Werte der Bildpunkte immer ganzzahlig sind, muß das Ergebnis gerundet werden. Dadurch entsteht ein Bild von 'gerasterten' Vektoren, wie es beispielhaft in den Figuren **6** und **7** dargestellt ist. Diese Abbildung läßt sich mit folgender Formel beschreiben:

$$B_x = Int\ (P_x\ /\ z)$$

$$B_y = Int\ (P_y\ /\ z),$$

wobei, $Z = Max(z_1, z_2)$, mit:

$$z_1 = (P_{xmax} - P_{xmin})/\ (B_{xmax} - B_{xmin})$$

und

$$z_2 = (P_{ymax} - P_{ymin})/\ (B_{ymax} - B_{ymin}).$$

Dabei sei folgende Terminologie zugrunde gelegt:

| | |
|---|---|
| Ausschnitt: | $P_{xmin}$, $P_{ymin}$, $P_{xmax}$, $P_{ymax}$ |
| Bildgröße: | $B_{xmin}$, $B_{ymin}$, $B_{xmax}$, $B_{ymax}$ |
| Punkt der Quelldaten: | $P = (p_x, p_y)^T$ |
| Punkt in der Bildfläche des Anzeigegerätes **16**: | $B = (b_x, b_y)^T$ |

Bei der Zentralprojektion der Quelldaten in den Bildbereich des Anzeigegerätes 16 ist aufgrund der erforderlichen ganzzahligen Rundung zwangsläufig ein Abbildungsfehler im Bereich einer halben Pixelbreite in X- und Y-Richtung (bezogen auf das Zentrum des Pixels) verbunden.

Durch das erfindungsgemäße Vorgehen kann die zusätzlich Abweichung, die durch die Approximation entsteht, wie folgt beschrieben werden:

Da ein Pixel am Bildschirm als ausgefüllte Fläche erscheint, läge der Originalpunkt innerhalb dieser Fläche, sofern dieselbe Auflösung am Bildschirm darstellbar wäre. Der entstehende Fehler entspricht daher einer gewissen Unschärfe in der Darstellung.

Durch das beschriebene Verfahren ist es möglich, die zusätzliche Abweichung so gering wie möglich zu halten, insbesondere kann die Abweichung in derselben Größenordnung gehalten werden wie sie der Fehler hat, der durch die Rundung bei der Zentralprojektion entsteht.

Die maximal mögliche Abweichung kann bei einem zulässigen Bereich größer Null eine Pixelbreite in X- bzw. Y-Richtung nicht unterschreiten.

Der Zusammenhang zwischen dem zulässigen Bereich $d_z$ und der maximal möglichen Abweichung â kann wie folgt hergestellt werden:

$0 < |dz| \leq 1 \qquad \Rightarrow â = \pm\ 1 \qquad$ (Angaben bezogen auf eine Pixelbreite)

$1 < |dz| \leq 2 \qquad \Rightarrow â = \pm\ 2$

usw.

Durch die gezielte Wahl des zulässigen Bereichs z.B. zwischen 0 und 1, sowie durch die Festlegung eines Schwellwertes für ein minimales mittleres Gewicht einer Ausgleichsstrekke kann das statistische Mittel der Abweichung beinahe stufenlos angepaßt werden.

Da die Länge der Ausgleichsstrecken bei zunehmendem zulässigen Bereich ebenfalls zunimmt, also die Anzahl der resultierenden Punkte der Linie geringer wird, läßt sich mit der Erfindung eine optimale Einstellung in Bezug auf die Größe der entstehenden Vektordatei und der gewünschten Darstellungsqualität leicht finden.

Es kann aber durchaus sinnvoll sein, eine größere Abweichung zuzulassen. Beispielsweise müssen Randlinien mindestens einen Pixel breit sein, so daß Verläufe, die um einen Pixel hin und her springen optisch letztlich nur als Verdickung der Linie in Erscheinung treten. D.h. der optische Eindruck verbessert sich in vielen Fällen, wenn der zulässige Fehler auf den Bereich von 1 bis $\sqrt{2}$ Pixeln oder mehr ausgedehnt wird.

Im folgenden wird die Vervollständigung der Linien erläutert:

Bei polygonalen Bilddaten **D** besteht die Schwierigkeit, daß die Polygone entsprechend ihres Verlaufs entlang den Begrenzungen des Ausschnitts **14** geschlossen werden müssen.

Das heißt, es genügt nicht, die nächstgelegenen Schnittpunkte an den Begrenzungen einfach zu verbinden.

Dieser Unterschied, der sich auf die korrekte Vervollständigung der Linien bezieht, ist in Figur 5 dargestellt.

Erfindungsgemäß werden deshalb neben der Untersuchung möglicher Schnittpunkte auch die Anzahl der Bereichsübergänge entsprechend des Rasters (vgl. Figur **4**) gezählt, um den Verlauf entlang der Berandung ergänzen zu können.

Im folgenden wird der Approximationsvorgang beschrieben:

Da die Abbildung in die Bildfläche zwangsläufig eine Rasterung der Vektoren bedeutet, erfolgt die Näherung bzw. der Approximationsvorgang vorzugsweise im Anschluß daran. Zum einen geht damit ein Informationsverlust einher, da der Abstand des ursprünglichen Vektors zu der Näherungsstrecke nun mit dem Abbildungsfehler behaftet ist. Andererseits ergibt sich dadurch die Möglichkeit, innerhalb eines gewissen Bereichs eine Menge von abstrakt möglichen Näherungen im Voraus - und damit nicht unter Echtzeitbedingungen - zu berechnen und in einer Tabelle **20** abzulegen. Die optimale Näherung kann dann in Echtzeit aus der Menge von möglichen Näherungen durch einen Zugriff auf eine zweite Datenstruktur, insbesondere die Tabelle **20**, ausgewählt werden.

In einer alternativen, vorteilhaften Form der Erfindung entfällt eine Vorausberechnung der Abweichungstabelle **20**. Eine Berechnung der Werte erfolgt dann unter Echtzeitbedingungen.

In der bevorzugten Ausführungsform wird als Bereich für die Vorausberechnung der Näherungen ein Kreis um den jeweiligen Startpunkt mit dem Radius r gewählt. Der Radius bestimmt dabei die Länge des längsten, approximierenden Vektors. Je nach Wahl der Größe dieses Bereichs bzw. Kreises kann einerseits die Güte der Approximation bzw. der Grad der Einsparung und andererseits der Approximationsaufwand bestimmt werden. Dabei stehen die beiden zuletzt genannten Größen in einem umgekehrt proportionalen Verhältnis.

Jeder Rasterpunkt bzw. jedes Pixel des Kreises bildet zusammen mit dem Zentrum eine mögliche Näherungsstrecke. Zu jeder Strecke werden nun die Flächenanteile aller Pixel des Kreises berechnet, die innerhalb der zulässigen Abweichung bezüglich der Strecke liegen. Sofern ein Flächenanteil größer Null ist, wird die Strecke als mögliche Näherung zu dem jeweiligen Pixel gespeichert. Die zulässige Abweichung wird vorzugsweise unabhängig von der Auflösung des Anzeigegerätes **16** in Anteilen von Bildschirmpixeln eingestellt.

Es entsteht somit eine (m x m) Matrix **2**0, wobei m die Anzahl der Punkte innerhalb des Kreises ausgenommen des Zentrums ist.

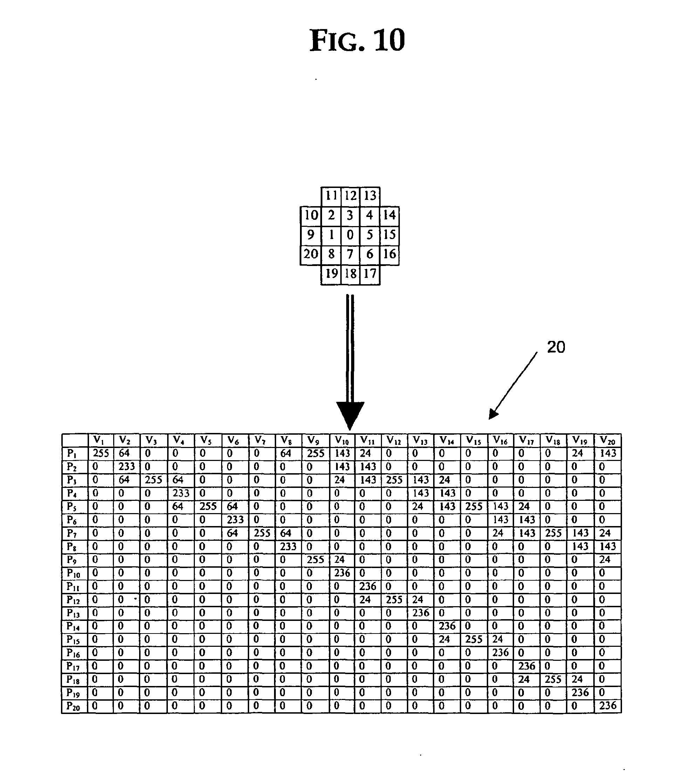

In Figur **10** ist exemplarisch gezeigt, welche Tabelle **20** sich ergibt, wenn ein Kreis mit Radius 2 und mit einer Anzahl von 20 Pixeln zugrunde gelegt wird. Ausgehend von dem mit '0' gekennzeichneten Zentrum existieren insgesamt 20 mögliche Vektoren (0→1, 0→2, 0→3,...).

Für jeden dieser Vektoren wird nun zu jeden Punkt ein gewichteter Abstand verwendet, der aus den Flächenanteilen innerhalb der zulässigen Abweichung der Strecke durch Multiplikation mit 255 und Vernachlässigung der Nachkommastellen berechnet wird. D.h. an die Stelle des Abstandes des Zentrums tritt die Bewertung, wieviel, das heißt welcher prozentuale Anteil von der Rasterfläche innerhalb des gültigen Bereiches liegt. Der Wertebereich des gewichteten Abstands liegt somit in einem Bereich von 0 bis 255.

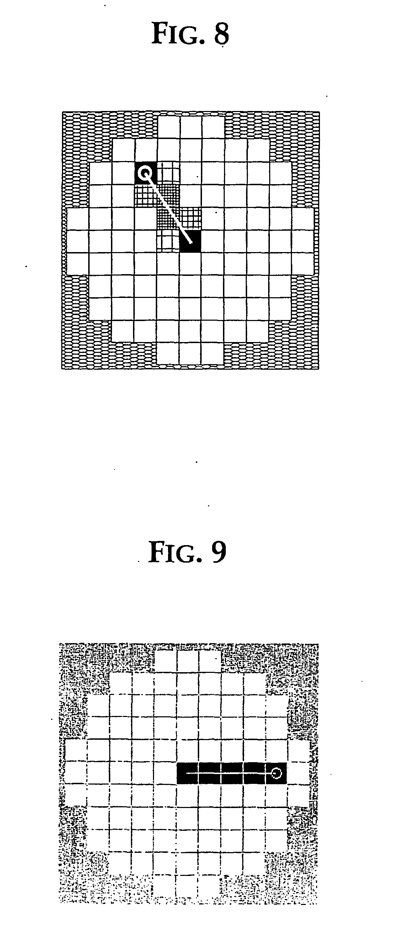

Figuren **8** und **9** zeigen die Auswirkung einer solchen Gewichtung. Es gelten die gleichen Randbedingungen, wie bei der in den Figuren **6** und **7** dargestellten Näherung. Die Rasterflächen sind entsprechend ihrer Gewichtung unterschiedlich dunkel dargestellt, wobei die Rasterflächen hervorgehoben dargestellt sind, deren Gewichtung dem Anteil der Fläche innerhalb des gültigen Bereiches entspricht.

Das Gewichtungsverfahren bedeutet, daß die verlorengegangenen Informationen auf statistischem Wege berücksichtigt werden. Bei vorausgesetzter Gleichverteilung der Originalpunkte über die Rasterfläche entspricht die Einfärbung der Wahrscheinlichkeit, daß der/die zugehörige(n) Originalpunkt(e) im zulässigen Bereich liegen. Bei den weißen Flächen ist die Wahrscheinlichkeit gleich Null.

Bei der Schnittmengenbildung für die Auswahl der optimalen Ausgleichsstrecke fallen alle die Strecken als mögliche Ausgleichsstrecke heraus, bei denen ein Bildpunkt der Folge das Gewicht Null hat.

Für die anderen Strecken werden die zugehörigen Gewichte der Punkte addiert.

Der Endpunkt einer geeigneten Ausgleichsstrecke muß nun möglichst nahe an dem letzten berücksichtigten Punkt liegen. Insbesondere sollte die Ausgleichsstrecke nicht über den letzten Punkt hinausragen .

Aus der Summe der Gewichte zu jeder verbleibenden Strecke und der Anzahl der berücksichtigten Punkte läßt sich das mittlere Gewicht zu jeder Strecke ermitteln. Beispielsweise hat eine Strecke, deren zulässiger Bereich von den Punkten nur gestreift wird eine sehr geringes, mittleres Gewicht, eine Strecke, bei der die meisten Punkte innerhalb des zulässigen Bereichs liegen dagegen ein hohes, mittleres Gewicht.

Ausgewählt wird somit diejenige Strecke, die mit dem höchsten mittleren Gewicht dem letzten berücksichtigtem Punkt der Folge am nächsten liegt.

Das mittlere Gewicht zu jeder verbliebenen Strecke der Schnittmenge wird zu jedem weiteren Punkt der Folge laufend berechnet, um auch diejenigen Strecken eliminieren zu können, bei denen der Wert eine Schwelle unterschreitet.

Das Unterschreiten der Schwelle kann daher auch zum Abbruch des Approximationsschrittes führen. Die Schwelle ist wählbar einstellbar.

Die in Figur **10** gezeigte 20*20-Tabelle **20** beinhaltet in der vertikalen Achse die jeweiligen Pixel und in der horizontalen Achse die möglichen Näherungen bzw. Näherungsvektoren, wobei die zulässige Abweichung hier 0,5 Pixel beträgt.

So ergibt sich beispielsweise für die Eingangspunktefolge $P_1$, $P_7$, $P_8$ der Vektor $V_8$ als einzige mögliche Näherung.

Da die Matrix **20** überwiegend Nullen enthält, werden in der bevorzugten Ausführungsform nur die Vektoren mit Werten ungleich Null zu den jeweiligen Punkten sortiert gespeichert.

Um das Ausschlußverfahren zu beschleunigen, kann die Matrix **20** zusätzlich in modifizierter Form verwendet werden. In den Spalten wird nur noch eingetragen, ob der Wert größer Null ist oder nicht. D.h. die Spaltenwerte können mit einem einzelnen Bit kodiert werden. Die Entscheidung, bis zu welchem Punkt der Eingangsfolge ein Näherungsvektor existiert, kann durch eine logische UND-Verknüpfung der einzelnen Zeilen getroffen werden.

Sofern die Zwischenergebnisse gespeichert werden, muß zu jedem weiteren Punkt lediglich eine weitere Zeile verknüpft werden. Wenn kein Näherungsvektor mehr übrig ist, kann aus den jeweils letzten Ergebnissen mit Hilfe der Matrix **20** der Vektor ausgewählt werden, dessen Wertesumme am größten ist, und dessen mittlerer Wichtungswert eine bestimmte Schwelle nicht unterschreitet.

In einer weiteren Ausführungsform des Verfahrens zur Übertragung von komprimierten Bilddaten ist dieses **dadurch gekennzeichnet, daß** sich der resultierende Vektor R näherungsweise mit folgender Formel beschreiben läßt:

$$R = P_0 + S * (S * P_n - S * P_0) / |S|^2,$$

wobei

$$S = (P_n - P_0) + ... + (P_2 - P_0) + (P_1 - P_0)$$

und

$P_i$ die Folge von Punkten ist.

Das Näherungsverfahren ist daher in etwa proportional zu der Gesamtanzahl der Punkte der Linie.

Figuren **6** und **7** zeigen zwei Beispiele für die Punkte, die innerhalb des zulässigen Bereichs einer Näherungsstrecke liegen. Dabei sind die Pixel schwarz dargestellt, deren Zentrum einen Abstand von weniger als 0,5 Pixeln zur weiß dargestellten Näherungsstrecke hat.

Es ist offensichtlich, daß hierbei bestimmte Richtungen bevorzugt werden. In Figur **6** fallen z.B. einige Punkte aus dem zulässigen Bereich heraus, obwohl die Originaldaten durchaus nahe genug gelegen haben können. In Figur **7** hingegen tritt dieser Fall nicht ein. Deshalb werden Näherungen in X- bzw. Y- Richtung das häufigste Resultat sein.

Um eine gleichmäßige Verteilung der Richtungen zu erreichen, wird deshalb die, oben beschriebene Gewichtung der Rasterpunkte bezüglich der Näherungsstrecke vorgenommen.

Ein wesentlicher Vorteil des erfindungsgemäßen Approximationsverfahrens ist, daß die Approximation so eingestellt werden kann, daß der resultierende Fehler die Größenordnung des Fehlers hat, der allein durch die erforderliche ganzzahlige Rundung bei der Projektion, vorzugsweise Zentralprojektion auf den Ausschnitt des Bildschirms **16** entsteht. Die Approximation ist also zielbild-orientiert und zielbild-abhängig.

Im folgenden seien die Grundlagen für die Berechnung der zweiten Datenstruktur **20** zur Approximation der Linien vorgestellt:

Bei der Berechnung aller möglichen Ausgleichsstrecken zu jeder Pixelfläche des Kreises wird bestimmt, wieviel der jeweiligen Fläche innerhalb einer vorgegebenen zulässigen Abweichung von der Strecke liegt.

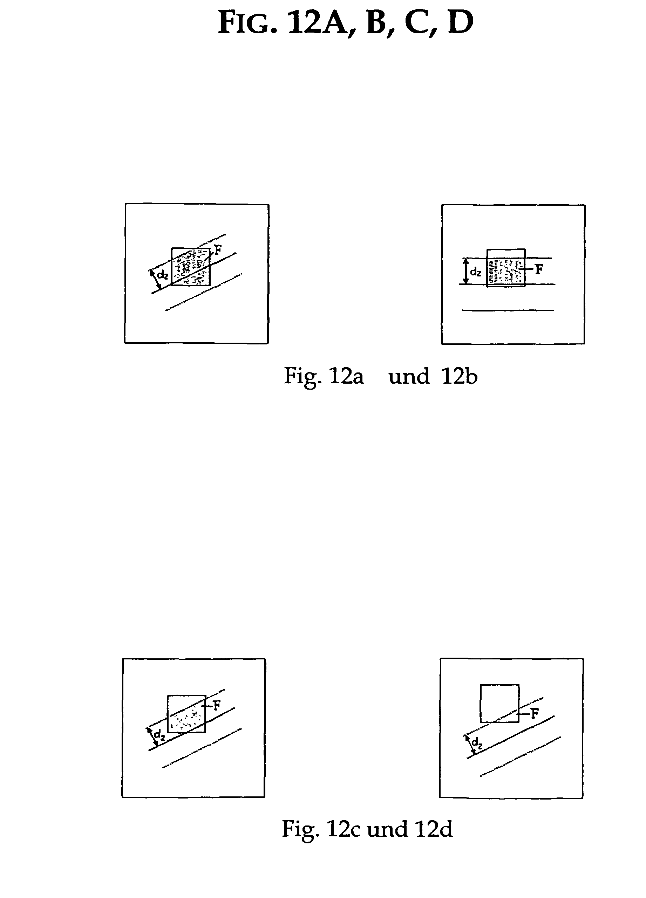

In Hinblick auf **Figur 12 a bis d** wird nachfolgend die Bewertung der Flächenverhältnisse erläutert:

In Figur **12a** liegt eine Ecke der Pixelfläche außerhalb des zulässigen Bereichs, in Figur **12b** liegen zwei Ecken der Pixelfläche mit identischem Abstand außerhalb des zulässigen Bereichs, in Figur **12c** liegen zwei Ecken der Pixelfläche mit unterschiedlichem Abstand außerhalb des zulässigen Bereichs und in Figur **12d** liegen drei Ecken der Pixelfläche außerhalb des zulässigen Bereichs.

Die vier Vektoren zu den Ecken der Pixelfläche **$D_1$, $D_2$, $D_3$, $D_4$** ergeben sich aus dem Punkt P, der das Zentrum der Pixelfläche repräsentiert, wie folgt:

$$D_{1x} = P_x + \tfrac{1}{2}, D_{1y} = P_y + \tfrac{1}{2}$$

$$D_{2x} = P_x + \tfrac{1}{2}, D_{2y} = P_y - \tfrac{1}{2}$$

$$D_{3x} = P_x - \tfrac{1}{2}, D_{3y} = P_y + \tfrac{1}{2}$$

$$D_{4x} = P_x - \tfrac{1}{2}, D_{4y} = P_x - \tfrac{1}{2}$$

Die Abstände der Ecken der Pixelfläche von der Ausgleichsstrecke mit dem Ortsvektor V errechnen sich zu:

$$d_1 = |\, D_{1y} * V_x - D_{1x} * V_y \,| \,/\, |V| \qquad\qquad ; d_2, d_3, d_4 \text{ berechnen sich analog.}$$

Die Abstände werden der Größe nach sortiert. Der größte Abstand sei $d_I$, der nächst größte $d_{II}$ dann $d_{III}$ und $d_{IV}$.

Die Fläche F innerhalb des zulässigen Bereichs $d_z$ muß bzgl. verschiedener Fälle betrachtet werden, von denen die vier grundlegenden in den Figuren 12a bis d dargestellt sind.

$F = 1$

für

$$d_I \le d_z,\ d_{II} \le d_z,\ d_{III} \le d_z,\ d_{IV} \le d_z$$

$$F = 1 - (\tfrac{1}{2} * (d_I - d_z)^2 * (V_x^2 + V_y^2) \,/\, |V_x * V_y|)$$

für

$$d_I > d_z,\ d_{II} \le d_z,\ d_{III} \le d_z,\ d_{IV} \le d_z \qquad\qquad \text{(Fig. 12a)}$$

$$F = 1 - (d_I - d_z)$$

für

$$d_I = d_{II} > d_z,\ d_{III} = d_{IV} \le d_z \qquad\qquad \text{(Fig. 12b)}$$

$$F = 1 - (\tfrac{1}{2} * (d_I^2 - d_{II}^2) * (V_x^2 + V_y^2) \,/\, |V_x * V_y|)$$

für

$$d_I > d_z,\ d_{II} > d_z,\ d_{III} \le d_z,\ d_{IV} \le d_z \qquad\qquad \text{(Fig. 12c)}$$

$$F = \tfrac{1}{2} * (d_z - d_{IV})^2 * (V_x^2 + V_y^2) \,/\, |V_x * V_y|$$

für

$$d_I > d_z,\ d_{II} > d_z,\ d_{III} > d_z,\ d_{IV} \le d_z \qquad \text{(Fig. 12d)}$$

$$F = 0$$

sonst.

Vorausgesetzt ist dabei, daß der Punkt **P** zwischen Ursprung und **V** liegt:

$$0 \le (P_x * V_x + P_y * V_y) \,/\, (V_x^2 + V_y^2) \le 1$$

Außerhalb dieses Bereich können nur dann Pixel mit einem Flächenanteil größer Null auftreten, wenn die zulässige Abweichung größer als eine halbe Pixelbreite ist.

Eine Näherung für diese Flächenanteile im Randbereich ergibt sich, wenn anstelle des Vektors **V** ein Vektor **V'**, sowie anstelle von **P** der Punkt **P'** verwendet wird.

Bei einem Punkt unterhalb des Ursprungs sei $P'_x = P_x$, $P'_y = P_y$, $V'_x = P_y$ und $V'_y = - P_x$, bei einem Punkt oberhalb von V sei $P'_x = P_x - V_x$, $P'_y = P_y - V_y$, $V'_x = P_y - V_y$ und $V'_y = - (P_x - V_x)$.

Die genäherte Fläche ergibt sich aus den oben angegebenen Formeln.

Eine genaue Berechnung dieser Flächenanteile, wobei der Randbereich jeweils einen Kreisbogen beschreibt, ist deutlich komplexer und in der Regel nicht notwendig.

An das Approximationsverfahren schließt sich ein Zusammensetzen der approximierten Linien an, so daß komprimierte Polygonzüge entstehen, die dann an den Client **12** übertragen werden.

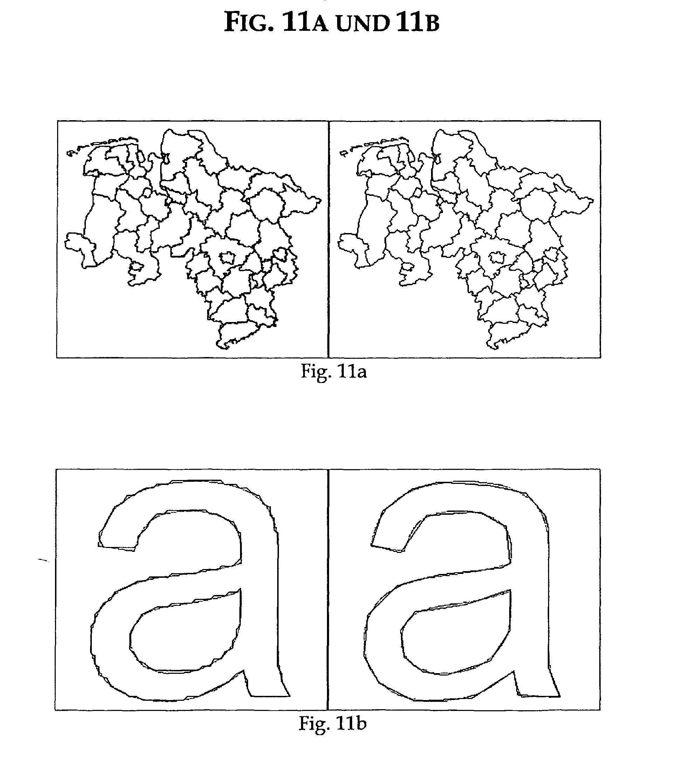

In den Figuren **11a** und **11b** sind Beispiele für komprimierte Bildschirmdarstellungen gezeigt. In Figur **11a** sind die Kreisgrenzen von Niedersachsen dargestellt; die linke Seite zeigt eine direkte Darstellung (40750 Punkte) und die rechte Seite zeigt eine erfindungsgemäß genäherte Darstellung bei 0,5 Pixeln zulässiger Abweichung und einer Schwelle von 127 (1966 Punkte).

Figur **11b** zeigt den Buchstaben 'a' sowohl in genäherter Darstellung als auch als Original; die linke Seite betrifft eine Näherung nach dem Stand der Technik, insbesondere nach dem Verfahren von Wall und Danielsson (95 Punkte) und die rechte Seite zeigt eine Näherung nach der Erfindung mit einer zulässigen Abweichung von 0,5 Pixeln und einer Schwelle von 127 (26 Punkte). Der Rechenaufwand des erfindungsgemäßen Verfahrens ist proportional zur Anzahl der Punkte und liegt damit in der gleichen Größenordnung wie der bei dem beschriebenen Verfahren aus dem Stand der Technik.

In der bevorzugten Ausführungsform des Geo-Informations-Systems ist ein Radius im Bereich zwischen 10 und 20 Pixeln voreingestellt. Dieser Bereich ist ausgelegt für die üblichen Bildschirmauflösungen von 800 x 600 oder 1024 x 768 Pixeln für die Darstellung von geographischen Daten. Ein größerer Radius bringt bei detailreichen Formen kaum noch eine Verringerung der Datenmenge. Bei detailarmen Formen ist eine weitere Verringerung nicht unbedingt von Interesse, da die entstehenden Vektordateien ohnehin schon recht klein sind. Die Größe der Bit-Matrix **20** steigt proportional zur vierten Potenz des Radius. Bei einem Radius von 20 Pixeln beträgt die Anzahl der Punkte innerhalb des Kreises 1305. Die resultierende Matrix 20 hat bei Ausnutzung der Symmetrie des Kreises eine Größe von etwa 200kB. Die modifizierte Form der Matrix **20** zur Beschleunigung der Schnittmengenbildung hat eine Größe von weniger als 55kB. Auf Anwenderseite kann als Graphik Standard SVG (Scalable Vector Graphics) verwendet werden, der die geringen Ladezeiten und die Interaktivität des Systems unterstützt.

In dieser Ausführungsform des erfindungsgemäßen Systems umfaßt eine Benutzeroberfläche Einstellungsmöglichkeiten des Rasters, des Radius, des Ausschnitts und für die Größe des Browser-Fensters auf dem Bildschirm **16**. Weiterhin können verschiedene Layer wahlweise ausgewählt werden, die für die Darstellung des komprimierten Bildes berücksichtigt werden sollen. Der Benutzer kann durch das Originalbild navigieren und bestimmte Ausschnitte anfordern, zoomen und/oder mit weiteren Zusatzdaten bzw. -objekten anreichern (z.B. das Anreichern durch die Aufnahme der Anzeige von Ballungsräumen oder Waldflächen etc.). Die Gesamtheit dieser Quelldaten in dem angeforderten Ausschnitt **14** wird berücksichtigt und komprimiert übertragen. Damit ist dieses System vollständig dynamisch interaktiv.

Für die Anwendung des erfindungsgemäßen Verfahrens müssen bei dem Client **12** keine Systemänderungen durchgeführt werden.

Vorzugsweise greift der Server 10 des Systems auf eine zweite Datenstruktur **20** zu, in der die Menge der möglichen und vorausberechneten Näherungen für einen vorbestimmten Bereich abgelegt sind. Die Auswahl der konkreten, optimalen Näherung erfolgt dann für den jeweiligen Ausschnitt und die jeweilige Bildgröße durch einen Lesezugriff auf die zweite Datenstruktur **20**.

**Patentansprüche**

1. Verfahren zur Kompression und Übertragung von geographischen Bilddaten (D), die Polygone und/oder Linien und/oder Punktdaten enthalten, die auf einem Server (10) abgelegt sind und von denen zumindest ein Ausschnitt (14) an einen Client (12) übertragen und auf einem Anzeigegerät (16) des Clients (12) dargestellt wird, durch

   - Vorverarbeiten der Daten, indem die polygonalen Daten in Teillinien zerlegt werden,
   - Bereitstellen einer zweiten Datenstruktur (20) mit Werten für die Durchführung einer Approximation der Linien und/oder Teillinien, wobei eine zulässige Abweichung unabhängig von einer Auflösung des Anzeigegerätes in Anteilen von Bildschirmpixeln voreingestellt wird, wobei die zweite Datenstruktur (20) so angelegt wird, daß diese für einen symmetrischen Bereich von Punkten in vorbestimmter, variabel einstellbarer Größe, wobei die Punkte Pixel auf dem Anzeigegerät (16) repräsentieren, alle möglichen Näherungsstrecken ausgehend vom Zentrum des Bereichs zu jedem Punkt des Bereichs und für alle möglichen Näherungsstrecken die Flächenanteile aller Pixel des symmetrischen Bereichs, die innerhalb der zulässigen Abweichung liegen, enthält,
   - Erfassen des Ausschnitts (14) der darzustellenden Bilddaten (D) und einer Bildgröße in Pixeln für die Darstellung auf dem Anzeigegerät (16), woraus alle im Ausschnitt enthaltenen Linien und/oder Teillinien und/oder Punktdaten ermittelt werden,
   - Umrechnen der Linien und/oder Teillinien sowie der Punktdaten des Ausschnitts auf die Bildgröße des Anzeigegerätes (16),
   - Approximation der umgerechneten Linien und/oder Teillinien unter Berücksichtigung der zulässigen Abweichung und durch Auswahl einer jeweils optimalen Näherung anhand der Werte der zweiten Datenstruktur (20),
   - Zusammensetzen der approximierten Teillinien zu komprimierten Polygonen und
   - Übertragen der komprimierten Polygone und/oder approximierten Linien und/oder Punktdaten an den Client (12) zur Darstellung auf dem Anzeigegerät (16).

2. Verfahren zur Kompression und Übertragung von Bilddaten nach Anspruch 1, **dadurch gekennzeichnet, daß** die Kompression der Daten auf dem Server (**10**) erfolgt und/oder zeitlich vor der Übertragung der Daten auf den Client (**12**) erfolgt.

3. Verfahren zur Kompression und Übertragung von Bilddaten nach mindestens einem der Ansprüche 1 oder 2, **dadurch gekennzeichnet, daß** die Approximation so ausgeführt wird, daß der durch sie entstehende Abweichungsfehler in der Größenordnung liegt, die sich ohnehin aufgrund der Rasterstruktur der Bildschirmpixel auf dem Anzeigegerät (**16**) des Client (**12**) ergibt.

4. Verfahren zur Kompression und Übertragung von Bilddaten nach mindestens einem der vorhergehenden Ansprüche, **dadurch gekennzeichnet, daß** die Werte aus dem Anteil der Pixelfläche berechnet werden, der innerhalb der vorbestimmten, zulässigen Abweichung liegt.

5. Verfahren zur Kompression und Übertragung von Bilddaten nach mindestens einem der vorhergehenden Ansprüche, **dadurch gekennzeichnet, daß** das Umrechnen der Bilddaten (**D**) erfolgt, indem alle im angeforderten Ausschnitt (**14**) enthaltenen Punkt- und Liniendaten, vorzugsweise proportional mit einer Zentralprojektion, in einen Bildbereich des Anzeigegerätes (**16**) skaliert werden, so daß zumindest eine Sequenz von Pixeln entsteht.

6. Verfahren zur Kompression und Übertragung von Bilddaten nach mindestens einem der vorhergehenden Ansprüche, **dadurch gekennzeichnet, daß** Original-Punkte der Bilddaten (**D**), vorzugsweise mittels Zentralprojektion, auf die Bildgröße des Anzeigegerätes (**16**) abgebildet werden und Liniendaten anschließend dem Approximationsvorgang unterzogen werden, indem iterativ eine Näherungsstrecke zu den jeweiligen Punkten bestimmt wird, durch Auslesen aller möglichen Näherungsstrecken innerhalb eines Bereichs aus der zweiten Datenstruktur (**20**) und nachfolgender Schnittmengenbildung.

7. Verfahren zur Kompression und Übertragung von Bilddaten nach mindestens einem der vorhergehenden Ansprüche, **dadurch gekennzeichnet, daß** Original-Punkte von Teillinien von Polygonen bzw. Linien der Bilddaten (**D**) der Approximation unterzogen werden, die auf einer iterativen Suche nach einer möglichst langen Näherungsstrecke basiert, indem zu einem Startpunkt Po solange zu den i folgenden Punkten ein resultierender Vektor R gebildet wird, bis zumindest eine Bedingung nicht mehr erfüllt ist, wobei der letzte Punkt, der die Bedingung erfüllt als neuer Startpunkt für einen nächsten Iterationslauf verwendet wird und wobei die Bedingung festgelegt ist durch folgende Relation:

" ein durch die Approximation entstandener Abweichungsfehler, der durch den Flächenanteil der Pixel definiert wird, der außerhalb des Toleranzbereichs der Näherungsstrecke liegt, übersteigt im Mittel nicht einen zulässigen, vorgegebenen Wert".

8. Verfahren zur Kompression und Übertragung von Bilddaten nach Anspruch 7, **dadurch gekennzeichnet, daß** bei einer nichtleeren Schnittmenge aller möglichen Näherungsstrecken und bei einem Abstand des folgenden Punktes zum Zentrum der geringer ist als die Länge der aktuell besten Näherungsstrecke die Approximation abgebrochen wird.

9. Verfahren zur Kompression und Übertragung von Bilddaten nach einem der Ansprüche 7 oder 8, **dadurch gekennzeichnet, daß** sich der resultierende Vektor R näherungsweise mit folgender Formel beschreiben läßt:

$$R = P_0 + S * (S * P_n - S * P_0) / |S|^2,$$

wobei

$$S = (P_n - P_0) + ... + (P_2 - P_0) + (P_1 - P_0)$$

und
$P_i$ die Folge von Punkten ist.

10. Verfahren zur Kompression und Übertragung von Bilddaten nach mindestens einem der vorhergehenden Ansprüche, **dadurch gekennzeichnet, daß** die Approximation auf einer iterativen Suche nach einer möglichst langen Näherungsstrecke basiert, die ihrerseits über einen Zugriff auf die vorausberechneten Werte der zweiten Datenstruktur (**20**) ermittelt wird.

11. Verfahren zur Kompression und Übertragung von Bilddaten nach mindestens einem der vorhergehenden Ansprüche, **dadurch gekennzeichnet, daß** in einer ersten Datenstruktur (**22**) zu jedem Bildobjekt, vorzugsweise zu jedem Polygon, eine sortierte Liste von zugehörigen Teillinien abgelegt ist, wobei Grenzlinien, die von mehreren Objekten verwendet werden, in der ersten Datenstruktur (**22**) jeweils nur einfach und mit einem Hinweis abgelegt sind, der zur Identifizierung des zugehörigen Objektes bzw. Polygons bestimmt ist.

12. Verfahren zur Kompression und Übertragung von Bilddaten nach mindestens einem der vorhergehenden Ansprüche, **dadurch gekennzeichnet, daß** zumindest die Vorverarbeitung der Daten und/oder die Berechnung der Werte der zweiten Datenstruktur (**20**) nicht in Echtzeit erfolgt.

13. Verfahren zur Kompression und Übertragung von Bilddaten nach mindestens einem der vorhergehenden Ansprüche, **dadurch gekennzeichnet, daß** die Daten zwischen dem Server (**10**) und dem Client (**12**) über ein Datenverkehrsnetz, vorzugsweise ein Intranet oder das Internet, übertragen werden.

14. Verfahren zur Kompression und Übertragung von Bilddaten nach mindestens einem der vorhergehenden Ansprüche, **dadurch gekennzeichnet, daß** eine Rekonstruktion der originalen Bilddaten (**D**) aus den approximierten Daten nicht möglich ist.

15. Geo-Informations-System zur Kompression und Übertragung von geographischen Bilddaten (**D**), **dadurch gekennzeichnet, daß** es ein Datenverarbeitungssystem als Server aufweist, das programmtechnisch so eingerichtet ist, daß es nach dem Verfahren nach einem der Ansprüche 1 bis 14 arbeitet.

16. Geo-Informations-System nach Anspruch 15, **dadurch gekennzeichnet, daß** es weiterhin einen Client (**12**) aufweist, der selbst zumindest ein Anzeigegerät (**16**) mit einer Auflösung und mit einer zur Darstellung der Bilddaten bestimmten Bildgröße aufweist, auf dem zumindest ein an den Client (**12**) übertragener Ausschnitt (**14**) der Daten dargestellt werden soll.

17. Computerprogramm, das Instruktionen aufweist, die zur Durchführung des Verfahrens nach einem der Ansprüche 1 bis 14 eingerichtet sind.

18. Computerprogrammprodukt, welches ein computerlesbares Medium mit Computerprogramm-Code-Mitteln aufweist, bei dem nach Laden des Computerprogramms der Computer durch das Programm zur Durchführung des Verfahrens nach einem der Ansprüche 1 bis 14 veranlaßt wird.

19. Signalprozessor zur Kompression und Übertragung von geographischen Bilddaten (D), die Polygone und/oder Linien und/oder Punktdaten enthalten, die auf einem Server (10) abgelegt sind und von denen zumindest ein Ausschnitt (14 zur Darstellung auf einem Anzeigegerät (16) an einen Client (12) übertragen wird, mit

- einem Modul zum Vorverarbeiten der Daten, indem die polygonalen Daten in Teillinien zerlegt werden,
- einem Modul zum Bereitstellen einer zweiten Datenstruktur (20) mit Werten für die Durchführung einer Approximation der Linien und/oder Teillinien, wobei eine zulässige Abweichung unabhängig von einer Auflösung des Anzeigegerätes in Anteilen von Bildschirmpixeln voreingestellt wird, wobei die zweite Datenstruktur (20) so angelegt wird, daß diese für einen symmetrischen Bereich von Punkten in vorbestimmter, variabel einstellbarer Größe, wobei die Punkte Pixel auf dem Anzeigegerät (16) repräsentieren, alle möglichen Näherungsstrecken ausgehend vom Zentrum des Bereichs zu jedem Punkt des Bereichs und für alle möglichen Näherungsstrecken die Flächenanteile aller Pixel des symmetrischen Bereichs, die innerhalb der zulässigen Abweichung liegen, enthält,
- einem Modul zum Erfassen des Ausschnitts (14) der darzustellenden Bilddaten (D) und einer Bildgröße in Pixeln für die Darstellung auf dem Anzeigegerät (16), woraus alle im Ausschnitt enthaltenen Linien und/oder Teillinien und/oder Punktdaten ermittelt werden,
- einem Modul zum Umrechnen der Linien und/oder Teillinien sowie der Punktdaten des Ausschnitts auf die Bildgröße des Anzeigegerätes (16),
- einem Modul zur Approximation der umgerechneten Linien und/oder Teillinien unter Berücksichtigung der zulässigen Abweichung und durch Auswahl einer jeweils optimalen Näherung anhand der Werte der zweiten Datenstruktur (20),
- einem Modul zum Zusammensetzen der approximierten Teillinien zu komprimierten Polygonen und
- einem Modul zur Übertragen der komprimierten Polygone und/oder approximierten Linien und/oder Punktdaten an den Client (12) zur Darstellung auf dem Anzeigegerät (16).

20. Signalprozessor zur Kompression und Übertragung von Bilddaten nach Anspruch 19, **dadurch gekennzeichnet, daß** das Kompressions- und Übertragungsmodul so ausgelegt ist, daß der durch die Approximation entstehende Abweichungsfehler die Größenordnung hat, die sich ohnehin aufgrund der Rasterstruktur der Bildschirmpixel auf dem Anzeigegerät (**16**) des Client (**12**) ergibt.

21. Signalprozessor zur Kompression und Übertragung von Bilddaten nach mindestens einem der Ansprüche 19 bis 20, **dadurch gekennzeichnet, daß** das Kompressions- und Übertragungsmodul so ausgelegt ist, daß die Approximation auf der iterativen Suche nach einer möglichst langen Ausgleichsstrecke unter Zugriff auf die zweite Datenstruktur (**20**) basiert, nachdem Original-Punkte der Bilddaten (**D**), vorzugsweise mittels Zentralprojektion, in den Bildbereich auf dem Anzeigegerät (**16**) abgebildet worden sind.

**Claims**

1. Method for compression and transmission of geographical image data (D) which contain polygons and/or lines and/or point data, which are stored on a server (10) and of which at least one excerpt (14) is transmitted to a client (12) and is represented on a display device (16) of the client (12), by

- preprocessing the data by dividing the polygonal data into partial lines,

- providing a second data structure (20) having values for carrying out an approximation of the lines and/or partial lines, a permissible deviation being preset independently of a resolution of the display device in portions of screen pixels,

the second data structure (20) being created in such a way that it contains for a symmetrical region of points of predetermined, variably adjustable size, where the points represent pixels on the display device (16), all possible approximation paths proceeding from the centre of the region to each point of the region and, for all possible approximation paths, the area portions of all the pixels of the symmetrical region which lie within the permissible deviation,

- detecting the excerpt (14) of the image data (D) to be represented and an image size in pixels for the representation on the display device (16), from which all the lines and/or partial lines and/or point data contained in the excerpt are determined,

- converting the lines and/or partial lines and the point data of the excerpt to the image size of the display device (16),

- approximating the converted lines and/or partial lines taking account of the permissible deviation and by choosing a respectively optimum approximation on the basis of the values of the second data structure (20),

- combining the approximated partial lines to form compressed polygons, and

- transmitting the compressed polygons and/or approximated lines and/or point data to the client (12) for representation on the display device (16).

2. Method for compression and transmission of image data according to Claim 1, **characterized in that** the compression of the data is effected on the server (10) and/or is effected temporally before the transmission of the data to the client (12).

3. Method for compression and transmission of image data according to at least one of Claims 1 or 2, **characterized in that** the approximation is performed in such a way that the deviation error that arises as a result of it is of the order of magnitude that results anyway on account of the raster structure of the screen pixels on the display device (16) of the client (12).

4. Method for compression and transmission of image data according to at least one of the preceding claims, **characterized in that** the values are calculated from that portion of the pixel area which lies within the predetermined permissible deviation.

5. Method for compression and transmission of image data according to at least one of the preceding claims, **characterized in that** the image data (D) are converted by all the point and line data contained in the requested excerpt (14) being scaled, preferably proportionally with a central projection, into an image region of the display device (16), with the result that at least one sequence of pixels arises.

6. Method for compression and transmission of image data according to at least one of the preceding claims, **characterized in that** original points of the image data (D) are imaged, preferably by means of central projection, onto the image size of the display device (16) and line data are subsequently subjected to the approximation operation by an approximation path to the respective points being determined iteratively, by reading out all possible approximation paths within a region from the second data structure (20) and subsequent intersection formation.

7. Method for compression and transmission of image data according to at least one of the preceding claims, **characterized in that** original points of partial lines of polygons or lines of the image data (D) are subjected to the approximation which is based on an iterative search for a longest possible approximation path by a procedure in which, with respect to a start point Po, a resulting vector R is formed with respect to the i subsequent points until at least one condition is no longer met, the last point that meets the condition being used as new start point for a next iteration run and the condition being defined by the following relation:

"a deviation error produced by the approximation and defined by the area portion of the pixels which lies outside the tolerance range of the approximation path does not, on average, exceed a permissible predetermined value".

8. Method for compression and transmission of image data according to Claim 7, **characterized in that** the approximation is terminated in the case of a non-empty intersection of all possible approximation paths and in the case of a distance between the subsequent point and the centre which is smaller than the length of the currently best approximation path.

9. Method for compression and transmission of image data according to either of Claims 7 and 8, **characterized in that** the resulting vector R can approximately be described by the following formula:

$$R = P_0 + S * (S * P_n - S * P_0)/|S|^2,$$

where

$$S = (P_n = P_0) + \ldots + (P_2 - P_0) + (P_1 - P_0)$$

and
$P_i$ is the sequence of points.

10. Method for compression and transmission of image data according to at least one of the preceding claims, **characterized in that** the approximation is based on an iterative search for a longest possible approximation path which, for its part, is determined by means of an access to the predicted values of the second data structure (20).

11. Method for compression and transmission of image data according to at least one of the preceding claims, **characterized in that** a sorted list of associated partial lines is stored in a first data structure (22) with respect to each image object, preferably with respect to each polygon, boundary lines that are used by a plurality of objects being stored in the first data structure (22) in each case only singly and with an indication that is determined for identifying the associated object or polygon.

12. Method for compression and transmission of image data according to at least one of the preceding claims, **characterized in that** at least the preprocessing of the data and/or the calculation of the values of the second data structure (20) are not effected in real time.

13. Method for compression and transmission of image data according to at least one of the preceding claims, **characterized in that** the data are transmitted between the server (10) and the client (12) via a data traffic network, preferably an intranet or the Internet.

14. Method for compression and transmission of image data according to at least one of the preceding claims, **characterized in that** a reconstruction of the original image data (D) from the approximated data is not possible.

15. Geographical information system for compression and transmission of geographical image data (D), **characterized in that** it has a data processing system as server which, from a program-technological standpoint, is set up in such a way that it operates according to the method according to any of Claims 1 to 14.

16. Geographical information system according to Claim 15, **characterized in that** it furthermore has a client (12), which itself has at least one display device (16) having a resolution and having an image size determined for representing the image data, on which at least one excerpt (14) of the data that is transmitted to the client (12) is intended to be represented.

17. Computer program having instructions that are set up for carrying out the method according to any of Claims 1 to 14.

18. Computer program product having a computer-readable medium with computer program code means, wherein, after the computer program has been loaded, the computer is caused to carry out the method according to any of Claims 1 to 14 by the program.

19. Signal processor for compression and transmission of geographical image data (D) which contain polygons and/or lines and/or point data, which are stored on a server (10) and of which at least one excerpt (14) is transmitted to a client (12) for representation on a display device (16), comprising

    - a module for preprocessing the data by dividing the polygonal data into partial lines,
    - a module for providing a second data structure (20) having values for carrying out an approximation of the lines and/or partial lines, a permissible deviation being preset independently of a resolution of the display device in portions of screen pixels,

the second data structure (20) being created in such a way that it contains for a symmetrical region of points of predetermined, variably adjustable size, where the points represent pixels on the display device (16), all possible approximation paths proceeding from the centre of the region to each point of the region and, for all possible approximation paths, the area portions of all the pixels of the symmetrical region which lie within the permissible deviation,

- a module for detecting the excerpt (14) of the image data (D) to be represented and an image size in pixels for the representation on the display device (16), from which all the lines and/or partial lines and/or point data contained in the excerpt are determined,

- a module for converting the lines and/or partial lines and the point data of the excerpt to the image size of the display device (16),

- a module for approximating the converted lines and/or partial lines taking account of the permissible deviation and by choosing a respectively optimum approximation on the basis of the values of the second data structure (20),

- a module for combining the approximated partial lines to form compressed polygons, and

- a module for transmitting the compressed polygons and/or approximated lines and/or point data to the client (12) for representation on the display device (16).

20. Signal processor for compression and transmission of image data according to Claim 19, **characterized in that** the compression and transmission module is designed in such a way that the deviation error that arises as a result of the approximation is of the order of magnitude that results anyway on account of the raster structure of the screen pixels on the display device (16) of the client (12).

21. Signal processor for compression and transmission of image data according to at least one of Claims 19 to 20, **characterized in that** the compression and transmission module is designed in such a way that the approximation is based on the iterative search for a longest possible compensation path with access to the second data structure (20) after original points of the image data (D) have been imaged, preferably by means of central projection, into the image region on the display device (16).

## Revendications

1. Procédé de compression et de transmission de données d'image (D) géographiques, qui contiennent des polygones et/ou des lignes et/ou des données de point, qui sont déposées sur un serveur (10) et desquelles au moins un extrait (14) est transmis à un client (12) et est représenté sur un appareil d'affichage (16) du client (12), comprenant les étapes de

- prétraitement des données, en découpant les données polygonales en lignes partielles,

- fourniture d'une deuxième structure de données (20) avec des valeurs pour exécuter une approximation des lignes et/ou lignes partielles, moyennant quoi un écart autorisé est réglé à l'avance en fonction d'une résolution de l'appareil d'affichage en fractions de pixels d'écran, moyennant quoi la deuxième structure de données (20) est conçue de telle sorte qu'elle contienne pour une zone symétrique de points dans une grandeur prescrite, réglable de manière variable, moyennant quoi les points représentent des pixels sur l'appareil d'affichage (16), tous les parcours d'approximation possibles partant du centre de la zone vers chaque point de la zone et qu'elle contienne pour tous les parcours d'approximation possibles la fraction de surface de tous les pixels de la zone symétrique, qui restent dans l'écart autorisé,

- détection de l'extrait (14) des données d'image (D) à représenter et d'une taille d'image en pixels à des fins de représentation sur l'appareil d'affichage (16), à partir de quoi toutes les lignes et/ou lignes partielles et/ou données de point contenues dans l'extrait sont déterminées,

- conversion des lignes et/ou lignes partielles ainsi que des données de point de l'extrait à la taille d'image de l'appareil d'affichage (16),

- approximation des lignes et/ou lignes partielles converties en prenant en compte l'écart autorisé et en sélectionnant une approximation optimale respective sur la base des valeurs de la deuxième structure de données (20),

- composition des lignes partielles approximées en polygones comprimés et

- transmission des polygones comprimés et/ou lignes approximées et/ou données de point au client (12) à des fins de représentation sur l'appareil d'affichage (16).

**2.** Procédé de compression et de transmission de données d'image selon la revendication 1, **caractérisé en ce que** la compression des données se fait sur le serveur (10) et/ou ponctuellement avant la transmission des données au client (12).

**3.** Procédé de compression et de transmission de données d'image selon au moins une des revendications 1 ou 2, **caractérisé en ce que** l'approximation est effectuée de telle sorte que les erreurs d'écart qu'elle génère restent dans l'ordre de grandeur, qui apparaît en raison de la structure de grille des pixels d'écran sur l'appareil d'affichage (16) du client (12).

**4.** Procédé de compression et de transmission de données d'image selon au moins une des revendications précédentes, **caractérisé en ce que** les valeurs sont calculées à partir de la fraction de la surface de pixels, qui reste dans l'écart autorisé prescrit.

**5.** Procédé de compression et de transmission de données d'image selon au moins une des revendications précédentes, **caractérisé en ce que** la conversion des données d'image (D) se fait **en ce que** toutes les données de point et de ligne contenues dans l'extrait (14) demandé sont agrandies, de préférence proportionnellement à une projection centrale, dans une région d'image de l'appareil d'affichage (16), de telle sorte qu'au moins une séquence de pixels soit générée.

**6.** Procédé de compression et de transmission de données d'image selon au moins une des revendications précédentes, **caractérisé en ce que** des points originaux des données d'image (D) sont reproduits, de préférence au moyen d'une projection centrale, sur la taille d'image de l'appareil d'affichage (16) et des données de ligne sont ensuite soumises à un processus d'approximation, en déterminant de manière itérative un parcours d'approximation vers les points respectifs, en lisant tous les parcours d'approximation possibles à l'intérieur d'une zone de la deuxième structure de données (20) et en formant consécutivement un ensemble de coupure.

**7.** Procédé de compression et de transmission de données d'image selon au moins une des revendications précédentes, **caractérisé en ce que** les points originaux des lignes partielles des polygones, respectivement lignes des données d'image (D), sont soumis à l'approximation, qui est basée sur une recherche itérative d'un parcours d'approximation le plus long possible, en formant à partir d'un point de départ Po vers les points suivants i un vecteur de résultat jusqu'à ce qu'au moins une condition ne soit plus remplie, moyennant quoi le dernier point, qui remplit la condition, est utilisé comme nouveau point de départ pour un processus d'itération suivant et moyennant quoi la condition est déterminée par la relation suivante :

« un erreur d'écart générée par l'approximation, qui est définie par la fraction de surface du pixel, qui se trouve en dehors de la zone de tolérance du parcours d'approximation, ne dépasse pas au milieu une valeur prescrite autorisée ».

**8.** Procédé de compression et de transmission de données d'image selon la revendication 7, **caractérisé en ce qu'**en présence d'un ensemble de coupure non vide de tous les parcours d'approximation possibles et en présence d'un espacement du point suivant par rapport au centre qui est inférieur à la longueur du meilleur parcours d'approximation actuel, l'approximation est interrompue.

**9.** Procédé de compression et de transmission de données d'image selon une des revendications 7 ou 8, **caractérisé en ce que** le vecteur R de résultat peut être approximativement décrit par la formule suivante :

$$R = P_0 + S * (S * P_n - S * P_0) / |S|^2,$$

dans
laquelle

$$S = (P_n - P_0) + ... + (P_2 - P_0) + (P_1 - P_0)$$

et Pi est la
séquence de points.

**10.** Procédé de compression et de transmission de données d'image selon au moins une des revendications précédentes, **caractérisé en ce que** l'approximation est basée sur une recherche itérative d'un parcours d'approximation le plus long possible, qui est déterminé pour sa part via un accès à la valeur préalablement calculée de la deuxième structure de données (20).

**11.** Procédé de compression et de transmission de données d'image selon au moins une des revendications précédentes, **caractérisé en ce que** dans une première structure de données (22), une liste triée de lignes partielles afférentes à chaque objet d'image, de préférence à chaque polygone, est déposée, moyennant quoi des lignes de démarcation, qui sont utilisées par plusieurs objets, sont déposées dans la première structure de données (22) de manière simple et accompagnées d'une indication, qui est déterminée afin d'identifier l'objet, respectivement le polygone afférent.

**12.** Procédé de compression et de transmission de données d'image selon au moins une des revendications précédentes, **caractérisé en ce qu'**au moins le prétraitement des données et/ou le calcul des valeurs de la deuxième structure de données (20) ne se fait pas en temps réel.

**13.** Procédé de compression et de transmission de données d'image selon au moins une des revendications précédentes, **caractérisé en ce que** les données sont transmises entre le serveur (10) et le client (12) via un réseau de trafic de données, de préférence un Intranet ou l'Internet.

**14.** Procédé de compression et de transmission de données d'image selon au moins une des revendications précédentes, **caractérisé en ce que** une reconstruction des données d'image originales (D) à partir des données approximées n'est pas possible.

**15.** Serveur de géo-information, pour la compression et la transmission de données d'image (D) géographiques, **caractérisé en ce qu'**un système de traitement de données présente un serveur, qui est conçu en terme de technique de programmation de telle sorte qu'il fonctionne selon le procédé selon une des revendications 1 à 14.

**16.** Serveur de géo-information selon la revendication 15, **caractérisé en ce qu'**il présente en outre un client (12), qui présente lui-même au moins un appareil d'affichage (16) avec une résolution et avec une taille d'image déterminée à des fins de représentation des données d'image, sur lequel au moins un extrait (14) des données transmis au client (12) doit être représenté.

**17.** Programme informatique, qui contient des instructions, qui sont conçues afin de mettre en oeuvre le procédé selon une des revendications 1 à 14.

**18.** Produit de programme informatique, qui présente un support lisible par ordinateur avec des moyens de code de programme informatique, dans lequel après le chargement du programme informatique l'ordinateur est démarré par le programme afin de mettre en oeuvre le procédé selon une des revendications 1 à 14.

**19.** Processeur de signaux pour la compression et la transmission de données d'image (D) géographiques, qui contiennent des polygones et/ou des lignes et/ou des données de point, qui sont déposées sur un serveur (10) et desquelles au moins un extrait (14) est transmis à des fins de représentation sur un appareil d'affichage (16) à un client (12), comportant :

   - un module de prétraitement des données, en découpant les données polygonales en lignes partielles,
   - un module de fourniture d'une deuxième structure de données (20) avec des valeurs pour exécuter une approximation des lignes et/ou lignes partielles, moyennant quoi un écart autorisé est réglé à l'avance en fonction d'une résolution de l'appareil d'affichage en fractions de pixels d'écran, moyennant quoi la deuxième structure de données (20) est conçue de telle sorte qu'elle contienne pour une zone symétrique de points dans une taille prescrite, réglable de manière variable, moyennant quoi les points représentent des pixels sur l'appareil d'affichage (16), tous les parcours d'approximation possibles partant du centre de la zone vers chaque point de la zone et qu'elle contienne pour tous les parcours d'approximation possibles la fraction de surface de tous les pixels de la zone symétrique, qui restent dans l'écart autorisé,
   - un module de détection de l'extrait (14) des données d'image (D) à représenter et d'une grandeur d'image en pixels à des fins de représentation sur l'appareil d'affichage (16), à partir de quoi toutes les lignes et/ou lignes partielles et/ou données de point contenues dans l'extrait sont déterminées,

- un module de conversion des lignes et/ou lignes partielles ainsi que des données de point de l'extrait à la taille d'image de l'appareil d'affichage (16),

- un module d'approximation des lignes et/ou lignes partielles converties en prenant en compte l'écart autorisé et en sélectionnant une approximation optimale respective sur la base des valeurs de la deuxième structure de données (20),

- un module de composition des lignes partielles approximées en polygones comprimés et

- un module de transmission des polygones comprimés et/ou lignes approximées et/ou données de point au client (12) à des fins de représentation sur l'appareil d'affichage (16).

20. Processeur de signaux pour la compression et la transmission de données d'image selon la revendication 19, **caractérisé en ce que** le module de compression et de transmission est conçu de telle sorte que l'erreur d'écart générée par l'approximation ait l'ordre de grandeur, qui apparaît en raison de la structure de grille des pixels d'écran sur l'appareil d'affichage (16) du client (12).

21. Processeur de signaux pour la compression et la transmission de données d'image selon au moins une des revendications 19 à 20, **caractérisé en ce que** le module de compression et de transmission est conçu de telle sorte que l'approximation soit basée sur la recherche itérative d'un parcours de compensation le plus long possible en accédant à la deuxième structure de données (20), après que les points originaux des données d'image (D) ont été représentés, de préférence au moyen d'une projection centrale, dans la zone d'image sur l'appareil d'affichage (16).

# FIG. 1

# FIG. 2

**Vorverarbeitung**

```
GIS-Datenmaterial
z.B. Shape-Files,
GEN-Files etc.
```

↓

```
Übernahme von Punkt- und Liniendaten und
Zerlegung von Polygonen in Teillinien, wobei mehrfach
genutzte Linien nur einfach vorkommen
```

D

**Echtzeitverarbeitung**

↓

```
Aufbereitetes
Datenmaterial
```

```
Anfrage mit Angabe des
Zoomausschnitts und
der Abmessungen des
Bildes in Pixeln
```

↓                    ↓

```
Auswahl der betroffenen Polygone, Linien und Punkte
anhand der Bounding-Box bzw. der Koordinaten
```

↓

```
Umrechnung der Polygone und Linien auf die Größe des
gewünschten Ausschnitts
```

↓

```
Approximation der Linien und der zu den Polygonen
gehörenden Teillinien
```

↓

```
Zusammenfügen der Teillinien zu geschlossenen,
komprimierten Polygonen
```

↓

```
Ausgabe der Punkt-, Linien und Polygondaten in einem
Vektor-Dateiformat (z.B. Macromedia Flash)
```

FIG. 3

18

## FIG. 4

## FIG. 5

# FIG. 6

# FIG. 7

## FIG. 8

## FIG. 9

# FIG. 10

```
      11 12 13
  10   2  3  4 14
   9   1  0  5 15
  20   8  7  6 16
      19 18 17
```

20

| | V₁ | V₂ | V₃ | V₄ | V₅ | V₆ | V₇ | V₈ | V₉ | V₁₀ | V₁₁ | V₁₂ | V₁₃ | V₁₄ | V₁₅ | V₁₆ | V₁₇ | V₁₈ | V₁₉ | V₂₀ |
|---|---|---|---|---|---|---|---|---|---|---|---|---|---|---|---|---|---|---|---|---|
| P₁ | 255 | 64 | 0 | 0 | 0 | 0 | 0 | 64 | 255 | 143 | 24 | 0 | 0 | 0 | 0 | 0 | 0 | 0 | 24 | 143 |
| P₂ | 0 | 233 | 0 | 0 | 0 | 0 | 0 | 0 | 0 | 143 | 143 | 0 | 0 | 0 | 0 | 0 | 0 | 0 | 0 | 0 |
| P₃ | 0 | 64 | 255 | 64 | 0 | 0 | 0 | 0 | 0 | 24 | 143 | 255 | 143 | 24 | 0 | 0 | 0 | 0 | 0 | 0 |
| P₄ | 0 | 0 | 0 | 233 | 0 | 0 | 0 | 0 | 0 | 0 | 0 | 0 | 143 | 143 | 0 | 0 | 0 | 0 | 0 | 0 |
| P₅ | 0 | 0 | 0 | 64 | 255 | 64 | 0 | 0 | 0 | 0 | 0 | 0 | 24 | 143 | 255 | 143 | 24 | 0 | 0 | 0 |
| P₆ | 0 | 0 | 0 | 0 | 0 | 233 | 0 | 0 | 0 | 0 | 0 | 0 | 0 | 0 | 0 | 143 | 143 | 0 | 0 | 0 |
| P₇ | 0 | 0 | 0 | 0 | 0 | 64 | 255 | 64 | 0 | 0 | 0 | 0 | 0 | 0 | 0 | 24 | 143 | 255 | 143 | 24 |
| P₈ | 0 | 0 | 0 | 0 | 0 | 0 | 0 | 233 | 0 | 0 | 0 | 0 | 0 | 0 | 0 | 0 | 0 | 0 | 143 | 143 |
| P₉ | 0 | 0 | 0 | 0 | 0 | 0 | 0 | 0 | 255 | 24 | 0 | 0 | 0 | 0 | 0 | 0 | 0 | 0 | 0 | 24 |
| P₁₀ | 0 | 0 | 0 | 0 | 0 | 0 | 0 | 0 | 0 | 0 | 236 | 0 | 0 | 0 | 0 | 0 | 0 | 0 | 0 | 0 |
| P₁₁ | 0 | 0 | 0 | 0 | 0 | 0 | 0 | 0 | 0 | 0 | 0 | 236 | 0 | 0 | 0 | 0 | 0 | 0 | 0 | 0 |
| P₁₂ | 0 | 0 | 0 | 0 | 0 | 0 | 0 | 0 | 0 | 0 | 24 | 255 | 24 | 0 | 0 | 0 | 0 | 0 | 0 | 0 |
| P₁₃ | 0 | 0 | 0 | 0 | 0 | 0 | 0 | 0 | 0 | 0 | 0 | 0 | 236 | 0 | 0 | 0 | 0 | 0 | 0 | 0 |
| P₁₄ | 0 | 0 | 0 | 0 | 0 | 0 | 0 | 0 | 0 | 0 | 0 | 0 | 0 | 236 | 0 | 0 | 0 | 0 | 0 | 0 |
| P₁₅ | 0 | 0 | 0 | 0 | 0 | 0 | 0 | 0 | 0 | 0 | 0 | 0 | 0 | 24 | 255 | 24 | 0 | 0 | 0 | 0 |
| P₁₆ | 0 | 0 | 0 | 0 | 0 | 0 | 0 | 0 | 0 | 0 | 0 | 0 | 0 | 0 | 0 | 236 | 0 | 0 | 0 | 0 |
| P₁₇ | 0 | 0 | 0 | 0 | 0 | 0 | 0 | 0 | 0 | 0 | 0 | 0 | 0 | 0 | 0 | 0 | 236 | 0 | 0 | 0 |
| P₁₈ | 0 | 0 | 0 | 0 | 0 | 0 | 0 | 0 | 0 | 0 | 0 | 0 | 0 | 0 | 0 | 0 | 24 | 255 | 24 | 0 |
| P₁₉ | 0 | 0 | 0 | 0 | 0 | 0 | 0 | 0 | 0 | 0 | 0 | 0 | 0 | 0 | 0 | 0 | 0 | 0 | 236 | 0 |
| P₂₀ | 0 | 0 | 0 | 0 | 0 | 0 | 0 | 0 | 0 | 0 | 0 | 0 | 0 | 0 | 0 | 0 | 0 | 0 | 0 | 236 |

# FIG. 11A UND 11B

Fig. 11a

Fig. 11b

# FIG. 12A, B, C, D

Fig. 12a und 12b

Fig. 12c und 12d

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5535316 A

**In der Beschreibung aufgeführte Nicht-Patentliteratur**

- A Fast Sequential Method for Polygonal Approximation of Digitized Curves. *Computer Vision, Graphics, and Image Processing,* 1984, vol. 28, 220-227

- Computational-Geometric Methods for Polygonal Approximations of a Curve. **Imai, H. et al.** Computer Vision Graphics and Image Processing. Academic Pressm Duluth, 01. Oktober 1986, vol. 36, 31-41